(19) Europäisches Patentamt / European Patent Office / Office européen des brevets

(11) **EP 4 400 610 A1**

(12) **EUROPEAN PATENT APPLICATION**
published in accordance with Art. 153(4) EPC

(43) Date of publication:
**17.07.2024 Bulletin 2024/29**

(21) Application number: **22889660.1**

(22) Date of filing: **13.09.2022**

(51) International Patent Classification (IPC):
*C21D 8/12* (2006.01)    *C22C 38/00* (2006.01)
*C22C 38/06* (2006.01)    *C22C 38/60* (2006.01)
*H01F 1/147* (2006.01)

(52) Cooperative Patent Classification (CPC):
**C21D 8/12; C22C 38/00; C22C 38/06; C22C 38/60;
H01F 1/147;** Y02P 10/20; Y02T 10/64

(86) International application number:
**PCT/JP2022/034142**

(87) International publication number:
**WO 2023/079836 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2021 JP 2021179432**

(71) Applicant: **JFE Steel Corporation
Tokyo 100-0011 (JP)**

(72) Inventors:
• **OKUBO Tomoyuki
Tokyo 100-0011 (JP)**
• **YAMADA Kuni
Tokyo 100-0011 (JP)**
• **TANAKA Takaaki
Tokyo 100-0011 (JP)**
• **SHIMOYAMA Yusuke
Tokyo 100-0011 (JP)**

(74) Representative: **Grünecker Patent- und
Rechtsanwälte
PartG mbB
Leopoldstraße 4
80802 München (DE)**

(54) **NON-ORIENTED ELECTROMAGNETIC STEEL PLATE AND MANUFACTURING METHOD
THEREOF**

(57)    Proposed is a non-oriented electrical steel sheet as a steel material from which both a rotor core material having excellent fatigue properties and a stator core material having excellent magnetic properties after core annealing is performed can be obtained. The steel sheet is produced by hot-rolling a steel material including predetermined amounts of C, Si, Mn, and Al, followed by hot-band annealing, cold rolling, and cold-band annealing, wherein the steel sheet is cooled before the final cold rolling to a temperature of 90°C or below followed by aging conducted at a temperature of 100 to 300°, cold rolled in the first pass of the final cold rolling at a bite temperature of 70°C or below using a work roll with a surface roughness Ra of 0.05 to 3.0 $\mu$m, and subjected to the cold-band annealing at 700 to 950°C, so that D1 to D3 satisfy predetermined conditions, provided that the average crystal grain size of crystal grains with all orientations, the average crystal grain size of crystal grains with the orientation {411}<148>, and the average crystal grain size of crystal grains with the orientation {211}<011>, each measured by electron backscatter diffraction, are respectively represented by D1, D2, and D3.

## Description

Technical Field

The present invention relates to a non-oriented electrical steel sheet preferably used for motor cores, and a method for producing the same.

Background Art

With the increasing demand for energy saving in electrical appliances in recent years, non-oriented electrical steel sheets used for iron cores of rotary machines have been required to have more excellent magnetic properties. Moreover, to meet the increasing demand for downsizing and higher output of drive motors for REVs (hybrid electric vehicles) and EVs (electric vehicles), the revolution numbers of the motors have been increased by increasing the driving frequency.

The core of such a drive motor typically consists of a stator core and a rotor core. The rotating rotor core is subjected to a greater centrifugal force as the number of revolutions increases. The rotor core structurally includes an extremely narrow portion (with a width of 1 to 2 mm) called a "rotor core bridge portion", which is subjected to a particularly high-stress state during the motor operation. Since the motor repeatedly rotates and stops, the rotor core is subjected to repeated stress due to centrifugal force. Therefore, an electrical steel sheet used for the rotor core is required to have excellent strength properties including both high strength and high fatigue strength.

Meanwhile, an electrical steel sheet used for a stator core desirably has high magnetic flux density and low iron loss to achieve downsizing and higher output of the motor. That is, an electrical steel sheet used for a motor core is required to have excellent strength properties (tensile strength and fatigue properties) when used for a rotor core, and excellent magnetic properties (magnetic flux density and iron loss properties) when used for a stator core.

As described above, an electrical steel sheet to be used for a motor core is required to have very different properties depending on whether it is used for a rotor core or a stator core. The rotor core and the stator core are typically assembled by laminating a rotor core material and a stator core material, respectively, which have been formed into the shapes of the cross sections of the respective cores. Thus, it is desirable for a motor core manufacturer (user) to obtain both the rotor core material and the stator core material from the same steel sheet material so that material yield and productivity can be increased.

Many production technologies have been proposed to produce non-oriented electrical steel sheets for motor cores that exhibit excellent strength properties and magnetic properties. For example, Patent Literature 1 discloses a method for increasing the Si content in a steel sheet and adding a strengthening element such as Ni and Cu to secure both the magnetic properties required for a stator core and the mechanical properties required for a rotor core. Patent Literature 2 discloses a method for producing a rotor core with high strength and a stator core with low iron loss from the same material. The method comprises subjecting a steel sheet after cold rolling to finishing annealing (hereinafter referred to as "cold-band annealing" in the present invention) to produce a high-strength non-oriented electrical steel sheet with a fine-grained structure, punching out a rotor core material and a stator core material from the steel sheet, laminating the respective core materials to assemble the rotor core and the stator core, and subjecting only the stator core to stress-relief annealing (hereinafter referred to as "core annealing" in the present invention). Patent Literature 3 discloses a method for producing a rotor core with high strength and a stator core with low iron loss and high magnetic flux density from the same material, by producing a high-strength non-oriented electrical steel sheet with a fine grain structure, taking a rotor core material and a stator core material from the steel sheet, laminating respective core materials to assemble the rotor core and the stator core, and subjecting the stator core to core annealing in which the stator core is heated from 600°C to the soaking temperature at a heating rate of 8°C/min.

Citation List

Patent Literature

Patent Literature 1: JP2008-50686A
Patent Literature 2: JP2004-315956A
Patent Literature 3: International Publication No. WO 2018/147044

Summary of Invention

Technical Problem

However, the present inventors have found, from the results of their research, that the methods disclosed in Patent Literatures 1 to 3 have become difficult to meet the strength and magnetic properties required for the steel sheet material for motor cores of EVs/HEVs and the like in recent years without reducing manufacturability. Specifically, such a method disclosed in Patent Literature 1 that increases the addition amounts of Si, Ni, Cu, and the like causes a fracture during cold rolling, which significantly reduces manufacturability. In addition, Ni and Cu are expensive elements and result in increased production costs. Meanwhile, the method disclosed in Patent Literature 2 can produce a non-oriented electrical steel sheet with high yield stress after cold-band annealing. However, there are still problems such that fatigue strength as another important property does not necessarily improve and that the iron loss improves but the magnetic flux density may significantly decrease after core annealing. Further, Patent Literature 3 discloses a method that can suppress the decrease in the magnetic flux density of the stator core during core annealing. However, there is a problem with this method; since the heating rate is high, the variation of magnetic properties of the stator core increases due to the variation of the temperature within an annealing furnace and the variation of the temperature of the stator core, which may decrease the production yield on the user's side.

The present invention has been made in view of the above problems of the conventional methods, and aims to provide a non-oriented electrical steel sheet that can suppress an increase in the production costs and a decrease in the production yield of motor cores on the user's side and that can be used as a raw material from which both a rotor core material having excellent strength properties (in particular, fatigue properties) and a stator core material having excellent magnetic properties after core annealing can be obtained, and an advantageous method for producing the same.

Solution to Problem

To address the above problems, the present inventors have conducted intensive studies on the influence of various factors upon the grain growth behavior in core annealing (stress-relief annealing) of a non-oriented electrical steel sheet. As a result, the present inventors have found that it is possible to reduce the size of the crystal grains and also to grow a crystal structure with a particular orientation, by applying an appropriate heat treatment before the final cold rolling, optimizing the rolling conditions of the first pass of the final cold rolling, and then applying appropriate cold-band annealing. Consequently, the inventors have found that it is possible to obtain a non-oriented electrical steel sheet with a high fatigue strength and with a small decrease in the magnetic flux density by subsequent core annealing (stress-relief annealing), and have arrived at the present invention.

The present invention based on the above findings is a non-oriented electrical steel sheet having an ingredient composition including C: 0.0005 to 0.0050 mass%, Si: 1.0 to 5.0 mass%, Mn: 0.05 to 5.0 mass%, P : 0 to 0.1 mass%, S: 0 to 0.010 mass%, Al: 0.005 to 3.0 mass%, and N: 0 to 0.010 mass%, with a balance being Fe and unavoidable impurities, characterized in that D1 is 75 $\mu$m or less and that D1 to D3 satisfy the following Expressions (1) and (2):

$$D2/D1 \geq 1.02 \ ...(1)$$

$$D3/D1 \geq 0.60 \ ...(2),$$

wherein
D1 represents an average crystal grain size of crystal grains with all orientations, D2 represents an average crystal grain size of crystal grains with an orientation {411}<148>, and D3 represents an average crystal grain size of crystal grains with an orientation {211}<011>, each measured by electron backscatter diffraction.

The non-oriented electrical steel sheet of the present invention further includes, in addition to the ingredient composition, at least one group selected from the following Groups A to E:

Group A: Cr: 0.01 to 5.0 mass%;
Group B: at least one selected from the ingredients consisting of Ca: 0.001 to 0.01 mass%, Mg: 0.0001 to 0.01 mass%, and REM: 0.001 to 0.05 mass%;
Group C: at least one selected from the ingredients consisting of Sn: 0.001 to 0.2 mass% and Sb: 0.001 to 0.2 mass%;
Group D: Ni: 0.01 to 3.0 mass%; and
Group E: at least one selected from the ingredients consisting of Cu: 0.01 to 0.5 mass%, Nb: 0.0010 to 0.05 mass%, Ti: 0.0010 to 0.05 mass%, and V: 0.0010 to 0.20 mass%.

The non-oriented electrical steel sheet of the present invention further includes, in addition to the ingredient composition, at least one group selected from the following Groups F and G:

Group F: at least one selected from the ingredients consisting of Ta: 0.0001 to 0.01 mass%, B: 0.0001 to 0.005 mass%, Ga: 0.0001 to 0.01 mass%, Pb: 0.0001 to 0.005 mass%, Zn: 0.001 to 0.01 mass%, Mo: 0.001 to 0.05 mass%, and W: 0.001 to 0.05 mass%; and
Group G: at least one selected from the ingredients consisting of Ge: 0.001 to 0.05 mass%, As: 0.001 to 0.05 mass%, and Co: 0.001 to 0.05 mass%.

The present invention also proposes a method for producing a non-oriented electrical steel sheet, including hot rolling a steel slab having an ingredient composition comprising C: 0.0005 to 0.0050 mass%, Si: 1.0 to 5.0 mass%, Mn: 0.05 to 5.0 mass%, P: 0 to 0.1 mass%, S: 0 to 0.010 mass%, Al: 0.005 to 3.0 mass%, and N: 0 to 0.010 mass%, with a balance being Fe and unavoidable impurities; performing hot-band annealing; performing cold rolling once or cold rollings with intermediate annealing interposed between each cold rolling twice or more to obtain a cold-rolled sheet with a final thickness; and subjecting the cold-rolled sheet to cold-band annealing, characterized in that the steel sheet before the cold rolling to obtain the final thickness is subjected to heat treatment by cooling the steel sheet to 90°C or below, aging the steel sheet at a temperature of 100 to 300°C, and then cooling the steel sheet again, that the first pass of the cold rolling to obtain the final thickness is conducted at a bite temperature of 70°C or below, using a work roll having a surface roughness Ra of 0.05 to 3.0 $\mu$m, and that the soaking temperature of the cold-band annealing is set in the range of 700 to 950°C.

The steel slab used for the method for producing a non-oriented electrical steel sheet of the present invention further includes, in addition to the ingredient composition, at least one group selected from the following Groups A to E:

Group A: Cr: 0.01 to 5.0 mass%;
Group B: at least one selected from the ingredients consisting of Ca: 0.001 to 0.01 mass%, Mg: 0.0001 to 0.01 mass%, and REM: 0.001 to 0.05 mass%;
Group C: at least one selected from the ingredients consisting of Sn: 0.001 to 0.2 mass% and Sb: 0.001 to 0.2 mass%;
Group D: Ni: 0.01 to 3.0 mass%; and
Group E: at least one selected from the ingredients consisting of Cu: 0.01 to 0.5 mass%, Nb: 0.0010 to 0.05 mass%, Ti: 0.0010 to 0.05 mass%, and V: 0.0010 to 0.20 mass%.

The steel slab used for the method for producing a non-oriented electrical steel sheet of the present invention further includes, in addition to the ingredient composition, at least one group selected from the following groups F and G:

Group F: at least one selected from the ingredients consisting of Ta: 0.0001 to 0.01 mass%, B: 0.0001 to 0.005 mass%, Ga: 0.0001 to 0.01 mass%, Pb: 0.0001 to 0.005 mass%, Zn: 0.001 to 0.01 mass%, Mo: 0.001 to 0.05 mass%, and W: 0.001 to 0.05 mass%; and
Group G: at least one element selected from the ingredients consisting of Ge: 0.001 to 0.05 mass%, As: 0.001 to 0.05 mass%, and Co: 0.001 to 0.05 mass%.

Advantageous Effects of Invention

The present invention can stably provide a non-oriented electrical steel sheet with both excellent fatigue properties and excellent magnetic properties, in particular, excellent magnetic flux density after core annealing. This not only contributes to improving the material yield and productivity on the user side, but also significantly contributes to improving the properties of a high-speed rotating motor.

Description of Embodiments

First of all, the present invention aims to develop a non-oriented electrical steel sheet having a high fatigue strength after cold-band annealing (finishing annealing) and a small decrease in the magnetic flux density in the subsequent core annealing (stress-relief annealing). Specifically, the present invention aims to develop a non-oriented electrical steel sheet having a fatigue strength of 470 MPa or more after cold-band annealing and having a magnetic flux density deterioration margin $\Delta B_{50}$ of 0.04 T or less by core annealing.

Here, the fatigue strength of 470 MPa is the minimum value of the fatigue strength considered necessary to withstand the centrifugal force generated when a rotor core material of a drive motor for an EV/HEV rotates at a high speed. Note that the fatigue strength refers to the maximum stress at which fatigue fracture does not occur in $10^7$ cycles when a tension fatigue test piece (a test piece No. 1 in accordance with JIS Z 2275:1978, b: 15 mm, R: 100 mm) having a longitudinal direction along with the rolling direction is subjected to a fatigue test under the conditions of pulsating tension loading, a stress ratio (=minimum stress/ maximum stress) of 0.1, and a frequency of 20 Hz. The magnetic flux density deterioration margin $\Delta B_{50}$ before and after core annealing refers to the difference between the magnetic flux density $B_{50}$ before core annealing and the magnetic flux density $B_{50}$ after core annealing (=magnetic flux density $B_{50}$ before core annealing - magnetic flux density $B_{50}$ after core annealing).

Next, the ingredient composition to be included in the non-oriented electrical steel sheet of the present invention having the above properties will be described.

C: 0.0005 to 0.0050 mass%

C is a harmful element that is precipitated as carbide on the grain boundaries during core annealing, thus increasing the iron loss after the core annealing. To prevent the deterioration of the iron loss properties, it is necessary to limit the C content in the steel sheet to 0.0050 mass% or less. Meanwhile, the present invention relates to, as described below, a method for controlling the recrystallization behavior of a rolling texture during cold-band annealing and thereby controlling the average grain size of crystal grains with a particular orientation after the cold-band annealing by performing heat treatment on a steel sheet before cold rolling to allow the solid solution C to be segregated at the grain boundaries. However, the effect cannot be sufficiently obtained if the C content is less than 0.0005 mass%. Accordingly, the C content is set in the range of 0.0005 to 0.0050 mass%. The preferable range of the C content is 0.0020 to 0.0040 mass%.

Si: 1.0 to 5.0 mass%

Si is an element essential for increasing the specific resistance of steel, thus reducing iron loss. In addition, Si also increases the strength of steel by solid-solution strengthening. To achieve such effects, Si is added at a content of 1.0 mass% or more, in the present invention. Meanwhile, the Si content exceeding 5.0 mass% would reduce the toughness, which would rather reduce the manufacturability. Therefore, the upper limit should be 5.0 mass%. The preferable range of the content of Si is 2.5 to 4.5 mass%.

Mn: 0.05 to 5.0 mass%

Mn is an effective element in increasing the specific resistance and strength of steel, similar to Si. Mn also improves hot workability. To achieve these effects, Mn is added at a content of 0.05 mass% or more. However, the addition of Mn in excess of 5.0 mass% promotes the precipitation of MnC, which may deteriorate the magnetic properties. Therefore, the upper limit should be 5.0 mass%. The preferable range of the Mn content is 0.10 to 3.0 mass%.

P: 0 to 0.1 mass%

P is an effective element for adjusting the strength (hardness) of steel. However, adding P in excess of 0.1 mass% reduces toughness and causes cracking during processing, which would rather reduce the manufacturability. Therefore, the upper limit should be 0.1 mass%. Although the lower limit is not specifically defined, it is preferably about 0.001 mass% because the excessive reduction of the P content would increase production costs. The more preferable range of the P content is 0.005 to 0.08 mass%.

S: 0 to 0.010 mass%

S is a harmful element that forms fine sulfide to be precipitated, adversely affecting the iron loss properties. Specifically, the S content exceeding 0.010 mass% causes significant adverse effects. Therefore, the S content should be limited to 0.010 mass% or less. The preferable S content is 0.005 mass% or less.

Al: 0.005 to 3.0 mass%

Al is an effective element for increasing the specific resistance of steel and reducing iron losses, similar to Si. To achieve such an effect, Al needs to be added at a content of 0.005 mass% or more. Meanwhile, the addition of Al in excess of 3.0 mass% may prompt nitriding of the surface of the steel sheet during cold-band annealing and core annealing, which may deteriorate the magnetic properties. Thus, the upper limit is set to 3.0 mass%. The preferable range of the content of Al is 0.010 to 2.0 mass%.

N: 0 to 0.010 mass%

N is a harmful element that forms fine nitride during cold-band annealing and core annealing to be precipitated, adversely affecting the iron loss properties. In particular, the N content exceeding 0.010 mass% causes significant adverse effects. Therefore, the upper limit should be 0.010 mass%. The preferable N content is 0.0030 mass% or less.
The non-oriented electrical steel sheet of the present invention may include, in addition to the above ingredients, the following elements, according to the required properties.

Cr: 0.01 to 5.0 mass%

Cr has the effect of increasing the specific resistance of steel to reduce iron loss. To achieve such an effect, Cr is preferably added at a content of 0.01 mass% or more. Meanwhile, when the Cr content exceeds 5.0 mass%, the magnetic flux density decreases due to a decrease in the saturation magnetic flux density. Therefore, when Cr is added, the Cr content is preferably within the range of 0.01 to 5.0 mass%.

At least one selected from the group consisting of Ca: 0.001 to 0.01 mass%, Mg: 0.0001 to 0.01 mass%, and REM: 0.001 to 0.05 mass%

Ca, Mg, and REM are each an element that has the effect of fixing S in steel as sulfide, thereby reducing iron loss. To achieve such an effect, Ca, Mg, and REM are preferably added to have contents of 0.001 mass% or more, 0.0001 mass% or more, and 0.001 mass% or more, respectively. Meanwhile, adding Ca, Mg, and REM in excess of 0.01 mass%, 0.01 mass%, and 0.05 mass%, respectively, saturates the above effect, which increases the raw material costs. Therefore, the upper limits of the Ca, Mg, and REM contents are 0.01 mass%, 0.01 mass%, and 0.05 mass%, respectively.

At least one selected from the group consisting of Sn: 0.001 to 0.2 mass% and S: 0.001 to 0.2 mass%

Sn and Sb are each an element that has the effect of improving the texture and increasing the magnetic flux density after cold-band annealing. To achieve this effect, Sn and Sb should be added at a content of 0.001 mass% or more. Meanwhile, the content exceeding 0.2 mass% would saturate the above effect, failing to form an insulation coating due to excessive surface segregation. Thus, the upper limits of Sn and Sb contents are preferably both set to 0.2 mass%.

Ni: 0.01 to 3.0 mass%

Ni is a magnetic element, that is, an element that exhibits ferromagnetism at room temperature, and has the effect of increasing the magnetic flux density when actively added. To achieve this effect, Ni is preferably added at a content of 0.01 mass% or more. Meanwhile, the Ni content exceeding 3.0 mass% would increase the raw material costs. Thus, the upper limit is preferably set to about 3.0 mass%.

At least one selected from the group consisting of Cu: 0.01 to 0.5 mass%, Nb: 0.0010 to 0.05 mass%, Ti: 0.0010 to 0.05 mass%, and V: 0.0010 to 0.20 mass%

Cu, Nb, Ti, and V are each an element that is finely precipitated by itself or in the form of carbide, nitride, or carbonitride, and thus have an effect of increasing the tensile strength and fatigue strength of the steel sheet. To achieve this effect, Cu is preferably added at a content of 0.01 mass% or more, and Nb, Ti, and V are each preferably added at a content of 0.0010 mass% or more. Meanwhile, adding Cu at a content of more than 0.5 mass%, Nb and Ti at a content of more than 0.05 mass% each, and V at a content of more than 0.20 mass% inhibits grain growth during core annealing, which may increase iron loss after the core annealing. Therefore, the upper limits of the contents of Cu, Nb, Ti, and V should be 0.5 mass%, 0.05 mass%, 0.05 mass%, and 0.20 mass%, respectively.

At least one selected from the group consisting of Ta: 0.0001 to 0.01 mass%, B: 0.0001 to 0.005 mass%, Ga: 0.0001 to 0.01 mass%, Pb: 0.0001 to 0.005 mass%, Zn: 0.001 to 0.01 mass%, Mo: 0.001 to 0.05 mass%, and W: 0.001 to 0.05 mass%

Each of these elements forms a precipitate by itself or forms a fine precipitate or inclusion with another element, thereby having the effect of increasing the tensile strength and fatigue strength of the steel sheet. To achieve the effect, each of Ta, B, Ga, and Pb is preferably added at a content of 0.0001 mass% or more, and each of Zn, Mo, and W is preferably added at a content of 0.001 mass% or more. Meanwhile, excessive additions of these elements inhibit grain growth during core annealing, which would rather increase iron loss after the core annealing. Therefore, these elements are preferably added at contents with their respective upper limits. The more preferable content ranges are Ta: 0.0002 to 0.002 mass%, B: 0.0002 to 0.002 mass%, Ga: 0.0002 to 0.005 mass%, Pb: 0.0002 to 0.002 mass%, Zn: 0.002 to 0.005 mass%, Mo: 0.002 to 0.03 mass%, and W: 0.002 to 0.03 mass%.

At least one selected from the group consisting of Ge: 0.001 to 0.05 mass%, As: 0.001 to 0.05 mass%, and Co: 0.001 to 0.05 mass%

Each of these elements can be added as appropriate because each element has the effect of increasing the magnetic flux density and reducing iron loss. To achieve this effect, each element is preferably added at a content of 0.001 mass% or more. However, additions of these elements at a content of more than 0.05 mass% saturates the effect. Therefore, the upper limit of the content of each element is preferably 0.05 mass%. More preferably, the upper limit of the content of each element is in the range of 0.002 to 0.03 mass%.

The balance other than the above ingredients of the non-oriented electrical steel sheet of the present invention substantially includes Fe and unavoidable impurities. It should be noted that the analysis of the content of each ingredient may be performed by a known analytical method, such as inductively coupled plasma mass spectroscopy, for example, and is not particularly limited.

Next, the texture of the non-oriented electrical steel sheet of the present invention will be described.

The average crystal grain size D1: 75 $\mu$m or less

The fatigue strength of a steel sheet can be improved by reducing the size of the crystal grain. Thus, the non-oriented electrical steel sheet of the present invention requires that the average crystal grain size of the entire steel sheet, i.e., crystal grains with all orientations should be 75 $\mu$m or less to obtain the fatigue strength of 470 MPa or more required for the steel sheet after cold-band annealing. Note that in the present invention, the average crystal grain size of crystal grains with all orientations is represented by D1.

However, the requirement that the average crystal grain size D1 should be 75 $\mu$m or less is insufficient to ensure that the non-oriented electrical steel sheet of the present invention has a fatigue strength of 470 MPa or more after cold-band annealing. In addition to this requirement, the average crystal grain size D3 of crystal grains with the orientation {211}<011> needs to be optimized with respect to the relationship with D1 as described below.

Furthermore, to allow the average crystal grain size D1 to be 75 $\mu$m or less, it is necessary to control the soaking temperature of the recrystallization annealing (cold-band annealing) performed after cold rolling described below to be within a predetermined range.

$$D2/D1 \geq 1.02$$

The non-oriented electrical steel sheet of the present invention requires that D2 should be larger than the average crystal grain size D1 of the crystal grains with all orientations, and Expression (1) below should be satisfied.

$$D2/D1 \geq 1.02 \ ...(1),$$

wherein the average crystal grain size of the crystal grains with the orientation {411}<148> is represented by D2.

By satisfying the relational expression, the magnetic flux density deterioration margin $\Delta B_{50}$ of the stator core material by core annealing can be suppressed to 0.04 T or less.

The mechanism for the above has not yet been clarified, but it is considered as follows. It is known that the crystal grains with the orientation {411}<148> have a crystal orientation that is advantageous to the magnetic properties. When the average crystal grain size D2 of the crystal grains with the orientation {411}<148> is coarser than the average crystal grain size D1, the crystal grains with the orientation {411}<148> encroach on small matrix crystal grains due to the size effect, which results in an increased area ratio. This can suppress a decrease in the magnetic flux density due to core annealing.

It is necessary to optimize a series of heat treatments (cooling and aging) before the final cold rolling, which will be described below, and the rolling conditions (bite temperature and surface roughness Ra of a work roll for a first pass of the final cold rolling) to obtain the average crystal grain size D2 of the crystal grains with the orientation {411}<148> that satisfies Expression (1) above.

$$D3/D1 \geq 0.60$$

The non-oriented electrical steel sheet of the present invention requires that D3 should satisfy Expression (2) below with respect to the average crystal grain size D1 of the crystal grains with all orientations.

D3/D1 $\geq$ 0.60 ...(2), wherein the average crystal grain size of crystal grains with the orientation {211}<011> is represented by D3.

The fatigue strength can be increased when Expression (2) is satisfied. In particular, the fatigue strength of 470 MPa or more required for the rotor core material of drive motors for EVs/HEVs can be stably obtained by satisfying the average crystal grain size D1 of crystal grains with all orientations of 75 $\mu$m or less and Expression (2).

The reason why the fatigue strength improves when Expression (2) is satisfied has not yet been sufficiently clarified, but it is considered as follows. The crystal grains with the orientation {211}<011> often have a flat shape in the rolling direction, and it is estimated that when the size of the crystal grain with the orientation {211}<011> is small, grain boundaries between the crystal grains with the orientation {211}<011> and adjacent crystal grains increase, which would accelerate the progression of cracks generated at inclusions and the like in steel.

To obtain the average crystal grain size D3 of the crystal grains with the orientation {211}<011> that satisfies Expression (2), it is necessary to optimize a series of heat treatments (cooling and aging) performed before the final cold rolling described below, and the rolling conditions (bite temperature and surface roughness Ra of a work roll for the first pass of the final cold rolling).

Hereinafter, a method of measuring the average crystal grain sizes D1 to D3 will be described.

A cross section perpendicular to the rolling direction of a test piece for texture observation (known as a C-cross section) is prepared as an observation surface. The observation surface is polished with colloidal silica to obtain a mirror surface. Then, the microstructure of the observation surface is measured by electron backscatter diffraction (EBSD). The measurement conditions are set such that the step size is 0.1 $\mu$m, and the measurement area has a size of 10 mm$^2$ or more, or a size where 5,000 or more crystal grains described below can be observed.

Next, among the thus obtained measurement results, only measurement points with a CI value of larger than 0.1 are analyzed with analysis software: "OIM Analysis 8.5", where a cleanup process is sequentially performed once on each measurement point under the conditions of the Grain Dilation function using Grain Tolerance Angle: 10° and Minimum Grain Size: 2; the Grain CI Standardization function using Grain Tolerance Angle: 10° and Minimum Grain Size: 2; and the Single (Average) Orientation per Grain function using Grain Tolerance Angle: 10° of the analysis software, and then, the local orientation data is analyzed to determine the average crystal grain sizes D1 to D3.

Specifically, regarding the average crystal grain size D1 of the crystal grains with all orientations in a cold-rolled annealed sheet, the Grain Tolerance Angle for the crystal grain boundaries is defined as 10° to determine the Area Average of the Grain Size (diameter).

In addition, regarding the average crystal grain size D2 of crystal grains with the orientation {411}<148>, only the crystal grains having a CI value of larger than 0.1 and also having a Tolerance of less than 15° among four crystal orientations: (114)[4-81], (141)[-814], (141)[-4-18], and (411)[-1-48] using the Crystal Orientation function are analyzed. Next, the Grain Tolerance Angle for the crystal grain boundaries is defined as 10° to determine the Area Average of the Grain Size (diameter). Note that each of the four crystal orientations is, when ferrite that is the parent phase has cubic symmetry, a crystallographically equivalent crystal orientation (variant) satisfied by the orientation {411}<148>.

Further, regarding the average crystal grain size D3 of crystal grains with the orientation {211}<011>, only the crystal grains having a Tolerance of less than 15° are analyzed among two crystal orientations: (211)[01-1] and (211)[0-11], using the Crystal Orientation function in the same way as the above.

Next, a method for producing a non-oriented electrical steel sheet of the present invention will be described.

A non-oriented electrical steel sheet of the present invention is produced as follows. That is, a steel material (slab) with the above ingredient composition is produced, and then hot rolled to obtain a hot-rolled sheet; the hot-rolled sheet is then subjected to hot-band annealing, pickled, and then subjected to one cold rolling or two or more cold rollings with intermediate annealing between each cold rolling to obtain a cold-rolled sheet with the final thickness (product thickness); the cold-rolled sheet is subjected to cold-band annealing. A specific description will be given below.

Steel material

A steel material (slab) used for producing a non-oriented electrical steel sheet of the present invention is produced by melting the steel adjusted to have the ingredient composition in accordance with the present invention described above, by a conventionally known refining process using, for example, a converter, an electric furnace, or further, a vacuum degassing apparatus. Note that the slab may be produced by any one of a continuous casting method, an ingot making-blooming method, and a thin slab continuous casting method.

Hot rolling

The slab is heated to a predetermined temperature and then subjected to hot rolling to obtain a hot-rolled sheet with a predetermined thickness. The conditions of the hot rolling are not particularly limited and are preferably such that the slab heating temperature is 1050 to 1230°C, the finishing rolling end temperature of the hot rolling is 800 to 950°C, the average cooling speed after the hot rolling is 20 to 100°C/s, and the coil winding temperature is within the range of 400 to 700°C, for example.

Hot-band annealing

The hot-rolled sheet after the hot rolling is subjected to hot-band annealing to completely recrystallize the rolling texture and thus uniformize the texture. The conditions of the hot-band annealing are not defined and are preferably set such that the soaking temperature is 800 to 1 100°C and the soaking time is in the range of 3 to 100 seconds.

Pickling

The steel sheet after the hot-band annealing is then pickled and descaled. The pickling conditions may be such that descaling is achieved to such an extent that cold rolling can be performed thereafter. For example, an ordinary pickling method using hydrochloric acid, sulfuric acid, or the like may be used. Note that the pickling may be performed after annealing in the hot-band annealing line, or in another line.

Cold rolling

The descaled hot-rolled sheet is then subjected to cold rolling to obtain a cold-rolled sheet with the final thickness (product thickness). The cold rolling may be performed once to obtain the final thickness, or it may be performed two or more times with intermediate annealing between each cold rolling to obtain the final thickness. Here, the rolling reduction of the cold rolling (final cold rolling) performed to obtain the final thickness is preferably 80% or more. Setting the rolling reduction to 80% or more can enhance the sharpness of the texture after the cold-band annealing, improving the magnetic properties. Note that the upper limit of the rolling reduction is not defined and is preferably about 98% because the rolling reduction rate of more than 98% would significantly increase the rolling load.

Heat treatment performed before final cold rolling

In the present invention, a predetermined heat treatment is applied to the steel sheet before it is subjected to the final cold rolling. Specifically, the heat treatment involves cooling the steel sheet to a temperature of 90°C or below, performing aging by heating the steel sheet to a temperature of 100 to 300°C, and then cooling the steel sheet again.
The steel sheet before the final cold rolling corresponds to the steel sheet after the hot-band annealing when cold rolling is performed once to obtain the final thickness, and corresponds to the steel sheet subjected to the intermediate annealing immediately before the final cold rolling when cold rolling is performed two or more times with intermediate annealing between each cold rolling to obtain the final thickness. The hot-band annealing and intermediate annealing are typically performed by continuous annealing, and thus the steel sheet is rapidly cooled from a high-temperature state. Therefore, the steel sheet is considered to include a large amount of the solid solution C in a supersaturated state remaining therein. In the present invention, the aging described above is performed on the steel sheet before the final cold rolling to allow the solid solution C to be segregated at the grain boundaries, thereby strengthening the grain boundaries, and also controlling the grain size of each of the crystal grains with the orientation {411}<148> and the crystal grains with the orientation {211 }<011> to be in an appropriate range. When the grain boundaries are sufficiently solid-solution-strengthened, dislocation motion at the crystal grain boundaries can be suppressed during cold rolling, thereby increasing the amount of strain introduced into the resulting cold-rolled sheet. However, insufficient segregation of the solid solution C at the grain boundaries would reduce the amount of strain introduced into the resulting cold-rolled sheet as well as the amount of strain introduced into crystal grains adjacent to the crystal grains with the orientation {211}<011>, thereby suppressing the recrystallization of the crystal grains with the orientation {211}<011>. Furthermore, the crystal grains with the orientation {411}<148> are formed as a result of the crystal grains with the orientation {211} <011> rotating about the <211> axis during the cold-band annealing process. Thus, insufficient formation of the crystal grains with the orientation {211}<011> would suppress the formation of the crystal grains with the orientation {411}<148>. Therefore, it would be difficult to control the grain size of each of the crystal grains with the orientation {211}<011> and the crystal grains with the orientation {411}<148>.
In the present invention, therefore, the steel sheet is cooled to a temperature of 90°C or below before being subjected to the final cold rolling, to further increase the degree of supersaturation of the solid solution C, thereby increasing the driving force for grain boundary segregation. Note that the lower limit of the cooling temperature for the steel sheet is not particularly defined and is preferably 0°C or higher, as the material would become brittle at a temperature below 0°C, which would adversely affect manufacturability. Note also that when the steel sheet has been rapidly cooled to a temperature of 90°C or below by annealing immediately before the final cold rolling, the steel sheet need not be cooled further because the solid solution C is already in the supersaturated state.

The method of cooling the steel sheet may be a known method including air cooling, gas cooling, or water cooling. In addition, the temperature of the steel sheet may be measured with a radiation thermometer, for example, and the temperature measuring tool is not particularly limited.

Next, the steel sheet which has been cooled to a temperature of 90°C or below to have an increased degree of supersaturation of the solid solution C is subjected to aging by heating the steel sheet to a temperature of 100 to 300°C before the final cold rolling so that the supersaturated solid solution C is segregated at the grain boundaries. The aging can allow the solid solution C segregated at the grain boundaries to solid-solution strengthen the grain boundaries, and can also promote the recrystallization of the crystal grains with the orientation {211}<011> in which strain is unlikely to accumulate during the final cold rolling, thereby controlling the grain size of the crystal grains with the orientation {211}<011>. In addition, the crystal rotation that occurs during recrystallization in the cold-band annealing step described below also contributes to controlling the crystal grains with the orientation {411}<148>.

When the aging is carried out at 100°C or below, the diffusion of the solid solution C would decrease, resulting in the above effects not being sufficiently obtained. Meanwhile, when the temperature is over 300°C, the solid solution C forms fine carbide particles to be precipitated, reducing the solid solution C segregated at the grain boundaries. This makes it impossible to obtain the grain boundary strengthening and grain size controlling effect. From the viewpoint of further increasing the above effects, the aging temperature is preferably in the range of 150 to 250°C. In addition, the aging time (soaking time) is preferably in the range of 10 seconds to 20 minutes. The heating method used for the aging is not particularly defined, and may use known methods including a method using a heat bath such as an air bath, oil bath, or sand bath; induction heating; or radiation heating using a radiant tube.

The steel sheet after the aging is then cooled. When the final cold rolling is performed immediately after the aging, the cooling temperature corresponds to the bite temperature of the first pass of the final cold rolling described below. Thus, the end temperature of the cooling is preferably set to 70°C or below.

Final cold rolling

The steel sheet subjected to a series of heat treatments (cooling and aging) is then subjected to the final cold rolling to obtain a cold-rolled sheet with the final thickness (product thickness). In this case, in the present invention, it is important to perform the first pass of the final cold rolling by using a work roll with a surface roughness Ra of 0.05 to 3.0 $\mu$m at a bite temperature of 70°C or below, which will be described in detail below.

The reason for setting the bite temperature in the first pass of the final cold rolling (temperature of the steel sheet when it is rolled in the first pass) to 70°C or below is as follows. That is, if the bite temperature exceeds 70°C, the nucleation of the crystal grains with the orientation {411}<148> during the cold rolling becomes excessive, resulting in the crystal grains with the orientation {411}<148> becoming finer after cold-band annealing and not satisfying Expression (2). This leads to a significant decrease in the magnetic flux density during core annealing. The bite temperature is preferably 50°C or below. Note that the lower limit of the bite temperature is not specifically defined, and is preferably 0°C or higher because the material would become brittle at a temperature below 0°C, which would adversely affect the manufacturability. In addition, the means for measuring the bite temperature in the first pass is not specifically defined and may use a radiation thermometer, for example.

The reason for controlling the surface roughness Ra of the work roll in the first pass of the final cold rolling to be in the range of 0.05 to 3.0 $\mu$m is as follows. That is, with the surface roughness Ra of less than 0.05 $\mu$m, sufficient strain cannot be introduced into the crystal grains with the orientation {211}<011>. This would lead to insufficient nucleation of the crystal grains with the orientation {411}<148> and failure to control the grain size of the crystal grains with the orientation {411}<148>, resulting in significantly reduced magnetic flux density after core annealing. Further, the amount of the strain introduced into crystal grains adjacent to the crystal grains with the orientation {211}<011> would decrease to suppress the grain growth of the crystal grains with the orientation {211}<011>, making the crystal grains with the orientation {210}<011> fine, with the result that sufficient fatigue strength could not be secured. Meanwhile, the surface roughness Ra of more than 3.0 $\mu$m would result in the nucleation of the crystal grains with the orientation {411}<148> being excessive. Thus, a large number of crystal grains with the orientation {411}<148> would be formed in cold-band annealing and made finer. Consequently, the crystal grain diameter ratio D2/D1 $\geq$ 1.02 would not be satisfied, which would lead to an increased magnetic flux density deterioration margin by core annealing. Note that, from the viewpoint of further increasing the above-described effect, the surface roughness Ra of the work roll is preferably in the range of 0.1 to 2.0 $\mu$m, and more preferably in the range of 0.15 to 0.4 $\mu$m. Herein, the surface roughness Ra is the arithmetical mean roughness defined by JIS B0601(2001). The means for measuring Ra is not specifically defined and may preferably use an optical coherence profilometer, for example.

The roll diameter of the work roll used in the first pass of the final cold rolling is preferably 800 mm $\phi$ or less, more preferably 600 mm $\phi$ or less, from the viewpoint of increasing the coefficient of friction and thus promoting the introduction of strain into the steel sheet to be rolled.

Cold-band annealing

The cold-rolled sheet with the final thickness is then subjected to cold-band annealing (finishing annealing) to obtain a steel structure with a predetermined crystal orientation and predetermined average crystal grain size by causing recrystallization. The soaking temperature of the cold-band annealing needs to be in the range of 700 to 950°C. The soaking temperature below 700°C might retard the growth of the crystal grains to be recrystallized, or in some cases, might cause incomplete recrystallization, leaving an unrecrystallized structure. This unrecrystallized structure tends to remain even after core annealing, which would significantly deteriorate the magnetic properties. Meanwhile, the soaking temperature exceeding 950°C would cause the recrystallized grains to become excessively coarse, failing to achieve the average crystal grain size D1 after the cold-band annealing of 75 $\mu$m or less. Note that the soaking temperature is preferably set in the range of 750 to 850°C from the viewpoint of stably securing high strength properties and excellent magnetic properties required for a rotor core.

Next, the surface of the steel sheet after the cold-band annealing is typically coated with an insulation coating to produce a non-oriented electrical steel sheet as a product sheet. The type (ingredient composition), coating method, and coating weight of the insulation coating are not limited and may be determined as appropriate in accordance with the properties required for product sheet.

When producing a motor core comprised of a rotor core and a stator core from a non-oriented electrical steel sheet, core materials with the cross-sectional shapes of the rotor core and the stator core are obtained from the steel sheet by punching or other methods. The rotor core and the stator core are assembled by laminating the respective core materials, and then the stator core is typically subjected to stress-relief annealing (core annealing) to remove processing strain and promote the crystal grain growth.

The iron loss properties are significantly improved by the core annealing. Meanwhile, the magnetic flux density may be adversely reduced due to grain growth in the crystal grains with an orientation disadvantageous to the magnetic properties along with the grain growth during the core annealing, and accompanying development of textures disadvantageous to the magnetic properties. However, according to the non-oriented electrical steel sheet of the present invention, since the average crystal grain size D2 of the crystal grains with the orientation {411}<148> satisfies the relationship of D2/D1 $\geq$ 1.02 with respect to the average crystal grain size D1 of the crystal grains with all orientations, it is possible to reduce the magnetic flux density deterioration margin $\Delta B_{50}$ by the core annealing to 0.04 T or less.

Example 1

A steel slab was produced to have an ingredient composition including C: 0.0023 mass%, Si; 3.41 mass%, Mn: 0.73 mass%, P: 0.0048 mass%, S: 0.0014 mass%, Al: 0.92 mass%, and N: 0.0015 mass%, with the balance being Fe and unavoidable impurities. The steel slab was then heated to a temperature of 1100°C for 20 minutes and subjected to hot rolling at a finishing rolling end temperature of 750°C and a winding temperature of 700°C to form a hot-rolled sheet with a thickness of 2.5 mm. The hot-rolled sheet was then subjected to hot-band annealing at 1000°C for 30 seconds, followed by pickling and a series of heat treatments under the conditions shown in Tables 1 before being subjected to the final cold rolling. The steel sheet was then subjected to cold rolling (final cold rolling) once to obtain a cold-rolled sheet with a final thickness of 0.25 mm. Note that the soaking time of the aging treatment performed before the final cold rolling was set to 2 minutes. The bite temperature of the first pass of the final cold rolling is determined by measuring the surface temperature of the steel sheet on the entry side in the first pass using a radiation thermometer. Next, the cold-rolled sheet was subjected to cold-band annealing at 850°C for 10 seconds in a reducing atmosphere containing $H_2:N_2$ = 20:80 as a vol% ratio and having a dew point of -40°C. The resulting sheet was coated with an insulation coating to form a cold-rolled annealed sheet. After that, the cold-rolled annealed sheet was subjected to heat treatment at 825°C for 1 hour by simulating core annealing (stress-relief annealing) in a reducing atmosphere containing $H_2:N_2$ = 20:80 as a vol% ratio and having a dew point of -40°C to produce a core annealed sheet.

The cold-rolled annealed sheet and core annealed sheet thus obtained were subjected to the following evaluation tests.

<Fatigue strength>

A tension fatigue test piece (a No. 1 test piece in accordance with JIS Z 2275:1978 with b: 15 mm and R: 100 mm) with a tension direction along with the rolling direction was taken from the cold-rolled annealed sheet, and subjected to a fatigue test under the conditions of pulsating tension loading, a stress ratio (=minimum stress/ maximum stress) of 0.1, and a frequency of 20 Hz. The maximum stress at which no fatigue fracture occurred in $10^7$ cycles was determined as the fatigue strength. Consequently, a test piece with a fatigue strength of 470 MPa or more was evaluated as having excellent fatigue properties.

<Magnetic properties>

A test piece for magnetic measurement having a width of 30 mm and length of 180 mm and having a longitudinal direction along with the rolling direction or along with a direction perpendicular to the rolling direction was taken from each of the cold-rolled annealed sheet and the core annealed sheet. Next, the magnetic flux density $B_{50}$ of the test piece of the cold-rolled annealed sheet, and the magnetic flux density $B_{50}$ and iron loss $W_{10/400}$ of the test piece of the core annealed sheet were each measured using the Epstein's method in accordance with JIS C 2550-1:2011. As a result, the test piece having a deterioration margin $\Delta B_{50}$ of the magnetic flux density $B_{50}$ before and after the core annealing (magnetic flux density $B_{50}$ before the core annealing - magnetic flux density $B_{50}$ after the core annealing) of 0.04 T or less was evaluated to have suppressed the decrease in the magnetic flux density due to the core annealing. The test piece having an iron loss $W_{10/400}$ of 11.5 W/kg or less after the core annealing was also evaluated to have excellent iron loss properties.

Table 1 also shows the measurement results from which the following can be deduced.

The steel sheets of the invention examples produced under the heat treatment condition before the cold rolling and the cold rolling conditions, both of which were in accordance with the present invention, satisfy the features of the present invention. Specifically, the average crystal grain size D1 of the crystal grains with all orientations in the steel sheets after the cold-band annealing is 75 $\mu$m or less, and the average crystal grain size D1, the average crystal grain size D2 of the crystal grains with the orientation {411}<148>, and the average crystal grain size D3 of the crystal grains with the orientation {210}<011> satisfy Expression (1) and (2) of the present invention. As a result, the steel sheets of the present invention examples are each found to have a fatigue strength of the steel sheet after the cold-band annealing of 470 MPa or more and a suppressed deterioration margin $\Delta B_{50}$ of the magnetic flux density $B_{50}$ of the steel sheet by the core annealing of 0.04 T or less.

In contrast, the cooling temperature before the final cold rolling in each of the steel sheets of the comparative examples such as steel sheets No. 4 and 5 exceeds 90°C. Therefore, the average crystal grain size ratio D2/D1 is less than 1.02, and the magnetic flux density is significantly reduced by the core annealing.

The aging temperature before the final cold rolling in each of the steel sheets No. 6 to 8, 14, and 15 is out of the range of 100 to 300°C. Thus, the average crystal grain size ratio D2/D1 is less than 1.02, and the magnetic flux density is significantly reduced by the core annealing.

The bite temperature of the first pass of the final cold rolling in each of the steel sheets No. 16 to 24 and 39 to 49 exceeds 70°C. Thus, the average crystal grain size ratio D2/D1 is less than 1.02, and the magnetic flux density is significantly reduced by the core annealing.

The surface roughness of the work roll WR in the first pass of the cold rolling in each of the steel sheets No. 37 and 38 exceeds 3.0 $\mu$m. Thus, the average crystal grain size ratio D2/D1 is less than 1.02, and the magnetic flux density is significantly reduced by the core annealing.

The surface roughness of the work roll WR in the first pass of the cold rolling in each of the steel sheets No. 28, 29, 39, and 40 is less than 0.05 $\mu$m. Thus, the average crystal grain size ratio D3/D1 of each steel sheet is less than 0.60, and a fatigue strength of 470 MPa is thus not ensured.

The soaking temperature of the cold-band annealing in each of the steel sheets No. 50 and 51 is less than 700°C. Therefore, a non-recrystallized texture remains after the cold-band annealing and the magnetic properties after the core annealing are significantly deteriorated.

Meanwhile, the soaking temperature of the cold-band annealing in each of the steel sheets No. 56 and 57 exceeds 950°C, and thus the average crystal grain size D1 after the annealing exceeds 75 $\mu$m. This indicates that the fatigue strength after the cold-band annealing is less than 470 MPa.

[Table 1-1]

| № | Heat treatment before final cold rolling | | 1st pass of final cold rolling | | Cold-band annealing temp. (°C) | Steel sheet properties after cold-band annealing | | | | | | | Steel sheet properties after core annealing | | | Remarks |
|---|---|---|---|---|---|---|---|---|---|---|---|---|---|---|---|---|
| | Cooling temp. (°C) | Heating temp. (°C) | Bite temp. (°C) | Surface roughness Ra($\mu$m) of WR | | Average crystal grain size($\mu$m) | | | Crystal gran size ratio | | Fatigue strength (MPa) | Magnetic flux density $B_{50}$(T) | Iron loss $W_{10/400}$ (W/kg) | Magnetic flux density $B_{50}$(T) | Deterioration margin $\triangle B_{50}$(T) of magnetic flux density | |
| | | | | | | All orientations D1 | {411} <148> orientation D2 | {211} <011> orientation D3 | D2/ D1 | D3 /D1 | | | | | | |
| 1 | 20 | 200 | 56 | 0.5 | 790 | 26.4 | 27.5 | 19.8 | 1.04 | 0.72 | 530 | 1.677 | 10.7 | 1.652 | 0.025 | Invention Example |
| 2 | 50 | 200 | 59 | 0.5 | 800 | 26.8 | 30.0 | 20.7 | 1.12 | 0.69 | 530 | 1.670 | 10.5 | 1.644 | 0.026 | Invention Example |
| 3 | 80 | 200 | 54 | 0.5 | 790 | 27.1 | 31.2 | 20.6 | 1.15 | 0.66 | 530 | 1.675 | 10.2 | 1.657 | 0.018 | Invention Example |
| 4 | 100 | 200 | 61 | 0.5 | 800 | 26.8 | 22.0 | 16.3 | 0.82 | 0.74 | 530 | 1.667 | 10.8 | 1.612 | 0.055 | Comparative Example |
| 5 | 120 | 200 | 52 | 0.5 | 810 | 26.8 | 22.5 | 14.2 | 0.84 | 0.63 | 530 | 1.673 | 10.9 | 1.614 | 0.059 | Comparative Example |
| 6 | 80 | No heating | 64 | 0.5 | 810 | 26.1 | 21.4 | 13.5 | 0.82 | 0.63 | 530 | 1.677 | 12.3 | 1.623 | 0.054 | Comparative Example |
| 7 | 80 | 50 | 59 | 0.5 | 800 | 27.1 | 23.6 | 14.9 | 0.87 | 0.63 | 530 | 1.674 | 11.5 | 1.622 | 0.052 | Comparative Example |
| 8 | 80 | 80 | 64 | 0.5 | 810 | 26.4 | 25.3 | 17.2 | 0.96 | 0.68 | 530 | 1.674 | 11.2 | 1.626 | 0.048 | Comparative Example |
| 9 | 80 | 120 | 55 | 0.5 | 800 | 25.9 | 26.9 | 17.8 | 1.04 | 0.66 | 530 | 1.672 | 10.8 | 1.648 | 0.024 | Invention Example |
| 10 | 80 | 160 | 55 | 0.5 | 800 | 27.1 | 29.8 | 20.6 | 1.10 | 0.69 | 530 | 1.666 | 10.3 | 1.648 | 0.018 | Invention Example |
| 11 | 80 | 200 | 53 | 0.5 | 810 | 26.2 | 33.3 | 24.3 | 1.27 | 0.73 | 530 | 1.679 | 10.2 | 1.663 | 0.016 | Invention Example |

| № | Heat treatment before final cold rolling | | 1st pass of final cold rolling | | Cold-band annealing temp. (°C) | Steel sheet properties after cold-band annealing | | | | | Fatigue strength (MPa) | Magnetic flux densi-ty $B_{50}$(T) | Steel sheet properties after core annealing | | | Remarks |
|---|---|---|---|---|---|---|---|---|---|---|---|---|---|---|---|---|
| | Cooling temp. (°C) | Heating temp. (°C) | Bite temp. (°C) | Surface roughness Ra($\mu$m) of WR | | Average crystal grain size($\mu$m) | | | Crystal gran size ratio | | | | Iron loss $W_{10/400}$ (W/kg) | Magnetic flux densi-ty $B_{50}$(T) | Deterioration margin $\Delta B_{50}$(T) of magneticflux density | |
| | | | | | | All orienta-tions D1 | {411}<148> ori-entation D2 | {211}<011> ori-entation D3 | D2/D1 | D3/D1 | | | | | | |
| 12 | 80 | 240 | 63 | 0.5 | 800 | 26.6 | 31.4 | 20.4 | 1.18 | 0.65 | 530 | 1.667 | 10.4 | 1.650 | 0.017 | Invention Example |
| 13 | 80 | 280 | 57 | 0.5 | 810 | 27.2 | 28.3 | 19.8 | 1.04 | 0.70 | 530 | 1.665 | 10.6 | 1.644 | 0.021 | Invention Example |
| 14 | 80 | 320 | 56 | 0.5 | 790 | 27.4 | 27.4 | 19.2 | 1.00 | 0.70 | 530 | 1.673 | 11.3 | 1.626 | 0.047 | Comparative Example |
| 15 | 80 | 350 | 56 | 0.5 | 810 | 26.9 | 21.3 | 15.7 | 0.79 | 0.74 | 530 | 1.673 | 12.2 | 1.618 | 0.055 | Comparative Example |
| 16 | 80 | 50 | 77 | 0.5 | 800 | 26.5 | 16.2 | 11.0 | 0.61 | 0.68 | 530 | 1.669 | 11.1 | 1.613 | 0.056 | Comparative Example |
| 17 | 80 | 80 | 79 | 0.5 | 810 | 26.1 | 15.7 | 11.7 | 0.60 | 0.75 | 530 | 1.678 | 10.6 | 1.619 | 0.059 | Comparative Example |
| 18 | 80 | 120 | 82 | 0.5 | 800 | 27.3 | 23.2 | 15.1 | 0.85 | 0.65 | 530 | 1.676 | 11.0 | 1.619 | 0.057 | Comparative Example |
| 19 | 80 | 160 | 84 | 0.5 | 790 | 26.9 | 21.3 | 14.7 | 0.79 | 0.69 | 530 | 1.674 | 11.0 | 1.620 | 0.054 | Comparative Example |
| 20 | 80 | 200 | 75 | 0.5 | 810 | 25.8 | 19.1 | 13.7 | 0.74 | 0.72 | 530 | 1.680 | 10.8 | 1.627 | 0.053 | Comparative Example |
| 21 | 80 | 240 | 77 | 0.5 | 800 | 26.1 | 21.4 | 15.6 | 0.82 | 0.73 | 530 | 1.677 | 11.1 | 1.619 | 0.058 | Comparative Example |
| 22 | 80 | 280 | 83 | 0.5 | 790 | 26.5 | 18.8 | 13.0 | 0.71 | 0.69 | 530 | 1.675 | 10.6 | 1.615 | 0.060 | Comparative Example |

EP 4 400 610 A1

| № | Heat treatment before final cold rolling | | 1st pass of final cold rolling | | Cold-band annealing temp. (°C) | Steel sheet properties after cold-band annealing | | | | | Fatigue strength (MPa) | Magnetic flux density B$_{50}$(T) | Steel sheet properties after core annealing | | | Remarks |
|---|---|---|---|---|---|---|---|---|---|---|---|---|---|---|---|---|
| | Cooling temp. (°C) | Heating temp. (°C) | Bite temp. (°C) | Surface roughness Ra(μm) of WR | | Average crystal grain size(μm) | | | Crystal gran size ratio | | | | Iron loss W$_{10/400}$ (W/kg) | Magnetic flux density B$_{50}$(T) | Deterioration margin ΔB$_{50}$(T) of magnetic flux density | |
| | | | | | | All orientations D1 | {411} <148> orientation D2 | {211} <011> orientation D3 | D2/ D1 | D3 /D1 | | | | | | |
| 23 | 80 | 320 | 79 | 0.5 | 790 | 26.8 | 16.9 | 12.0 | 0.63 | 0.71 | 530 | 1.675 | 10.8 | 1.621 | 0.054 | Comparative Example |
| 24 | 80 | 350 | 82 | 0.5 | 800 | 26.0 | 15.1 | 11.0 | 0.58 | 0.73 | 530 | 1.665 | 11.7 | 1.612 | 0.053 | Comparative Example |

[Table 1-2]

| № | Heat treatment before final cold rolling | | 1st pass of final cold rolling | | Cold-band annealing temp. (°C) | Steel sheet properties after cold-band annealing | | | | | Fatigue strength (MPa) | Magnetic flux density B$_{50}$(T) | Steel sheet properties after core annealing | | | Remarks |
|---|---|---|---|---|---|---|---|---|---|---|---|---|---|---|---|---|
| | Cooling temp. (°C) | Heating temp. (°C) | Bite temp. (°C) | Surface roughness Ra(μm) of WR | | Average crystal grain size (μm) | | | Crystal grain size ratio | | | | Iron loss W$_{10/400}$ (W/kg) | Magnetic flux density B$_{50}$(T) | Deterioration margin ΔB$_{50}$(T) of magnetic flux density | |
| | | | | | | All orientations D1 | {411} <148> orientation D2 | {211} <011> orientation D3 | D2/ D1 | D3/ D1 | | | | | | |
| 25 | 80 | 200 | 32 | 0.5 | 800 | 27.4 | 36.4 | 24.4 | 1.33 | 0.67 | 530 | 1.666 | 10.1 | 1.652 | 0.014 | Invention Example |
| 26 | 80 | 200 | 45 | 0.5 | 790 | 27.2 | 35.1 | 23.2 | 1.29 | 0.66 | 530 | 1.676 | 9.8 | 1.664 | 0.012 | Invention Example |
| 27 | 80 | 200 | 52 | 0.5 | 790 | 25.8 | 29.7 | 19.3 | 1.15 | 0.65 | 530 | 1.680 | 10.8 | 1.657 | 0.023 | Invention Example |
| 28 | 80 | 200 | 56 | 0.01 | 790 | 27.3 | 15.3 | 4.9 | 0.56 | 0.32 | 420 | 1.669 | 11.2 | 1.617 | 0.052 | Comparative Example |
| 29 | 80 | 200 | 60 | 0.02 | 810 | 26.2 | 26.2 | 11.8 | 1.00 | 0.45 | 420 | 1.671 | 10.7 | 1.626 | 0.045 | Comparative Example |
| 30 | 80 | 200 | 62 | 0.06 | 790 | 26.8 | 28.7 | 18.9 | 1.07 | 0.66 | 530 | 1.669 | 11.1 | 1.640 | 0.029 | Invention Example |
| 31 | 80 | 200 | 64 | 0.1 | 810 | 27.2 | 31.6 | 20.8 | 1.16 | 0.66 | 530 | 1.673 | 10.3 | 1.651 | 0.022 | Invention Example |
| 32 | 80 | 200 | 62 | 0.15 | 810 | 27.5 | 32.5 | 23.4 | 1.18 | 0.72 | 530 | 1.674 | 9.7 | 1.642 | 0.017 | Invention Example |
| 33 | 80 | 200 | 63 | 0.4 | 800 | 26.1 | 31.3 | 21.3 | 1.20 | 0.68 | 530 | 1.676 | 9.8 | 1.655 | 0.018 | Invention Example |
| 34 | 80 | 200 | 64 | 1.0 | 800 | 26.2 | 32.5 | 20.8 | 1.24 | 0.64 | 530 | 1.668 | 9.6 | 1.650 | 0.020 | Invention Example |
| 35 | 80 | 200 | 60 | 2.0 | 790 | 26.1 | 29.8 | 20.8 | 1.14 | 0.70 | 530 | 1.671 | 10.1 | 1.652 | 0.023 | Invention Example |

| № | Heat treatment before final cold rolling | | 1st pass of final cold rolling | | Cold-band annealing temp. (°C) | Steel sheet properties after cold-band annealing | | | | | | | Steel sheet properties after core annealing | | | Remarks |
|---|---|---|---|---|---|---|---|---|---|---|---|---|---|---|---|---|
| | | | | | | Average crystal grain size (μm) | | | Crystal grain size ratio | | Fatigue strength (MPa) | Magnetic flux density $B_{50}$(T) | Iron loss $W_{10/400}$ (W/kg) | Magnetic flux density $B_{50}$(T) | Deterioration margin $\Delta B_{50}$(T) of magnetic flux density | |
| | Cooling temp. (°C) | Heating temp. (°C) | Bite temp. (°C) | Surface roughness Ra(μm) of WR | | All orientations D1 | {411} <148> orientation D2 | {211} <011> orientation D3 | D2/ D1 | D3/ D1 | | | | | | |
| 36 | 80 | 200 | 65 | 3.0 | 800 | 26.3 | 27.9 | 18.1 | 1.06 | 0.65 | 530 | 1.674 | 10.4 | 1.645 | 0.029 | Invention Example |
| 37 | 80 | 200 | 56 | 3.5 | 790 | 26.6 | 26.9 | 19.3 | 1.01 | 0.72 | 530 | 1.674 | 10.6 | 1.630 | 0.044 | Comparative Example |
| 38 | 80 | 200 | 61 | 4.0 | 790 | 26.6 | 22.9 | 16.9 | 0.86 | 0.74 | 530 | 1.670 | 11.1 | 1.615 | 0.055 | Comparative Example |
| 39 | 80 | 200 | 87 | 0.01 | 800 | 26.5 | 17.8 | 3.4 | 0.67 | 0.19 | 430 | 1.671 | 13.1 | 1.620 | 0.051 | Comparative Example |
| 40 | 80 | 200 | 80 | 0.02 | 800 | 27.3 | 21.3 | 7.9 | 0.78 | 0.37 | 420 | 1.666 | 12.5 | 1.614 | 0.052 | Comparative Example |
| 41 | 80 | 200 | 81 | 0.06 | 800 | 26.5 | 18.8 | 12.0 | 0.71 | 0.64 | 530 | 1.667 | 10.8 | 1.608 | 0.055 | Comparative Example |
| 42 | 80 | 200 | 87 | 0.1 | 790 | 27.0 | 20.0 | 14.2 | 0.74 | 0.71 | 530 | 1.667 | 11.1 | 1.614 | 0.053 | Comparative Example |
| 43 | 80 | 200 | 84 | 0.15 | 800 | 27.3 | 19.9 | 14.1 | 0.73 | 0.71 | 530 | 1.659 | 11.3 | 1.604 | 0.055 | Comparative Example |
| 44 | 80 | 200 | 79 | 0.4 | 800 | 26.8 | 19.3 | 14.1 | 0.72 | 0.73 | 530 | 1.673 | 11.2 | 1.616 | 0.057 | Comparative Example |
| 45 | 80 | 200 | 77 | 1.0 | 790 | 27.5 | 23.4 | 15.4 | 0.85 | 0.66 | 530 | 1.672 | 11.0 | 1.621 | 0.051 | Comparative Example |
| 46 | 80 | 200 | 83 | 2.0 | 810 | 27.0 | 17.3 | 11.2 | 0.64 | 0.65 | 530 | 1.671 | 10.7 | 1.616 | 0.055 | Comparative Example |

EP 4 400 610 A1

(continued)

| № | Heat treatment before final cold rolling | | 1st pass of final cold rolling | | Cold-band annealing temp. (°C) | Steel sheet properties after cold-band annealing | | | | | | | Steel sheet properties after core annealing | | | Remarks |
|---|---|---|---|---|---|---|---|---|---|---|---|---|---|---|---|---|
| | | | | | | Average crystal grain size (μm) | | | Crystal grain size ratio | | Fatigue strength (MPa) | Magnetic flux density B$_{50}$(T) | Iron loss W$_{10/400}$ (W/kg) | Magnetic flux density B$_{50}$(T) | Deterioration margin ΔB$_{50}$(T) of magnetic flux density | |
| | Cooling temp. (°C) | Heating temp. (°C) | Bite temp. (°C) | Surface roughness Ra(μm) of WR | | All orientations D1 | {411}<148> orientation D2 | {211}<011> orientation D3 | D2/D1 | D3/D1 | | | | | | |
| 47 | 80 | 200 | 77 | 3.0 | 790 | 26.9 | 24.7 | 17.1 | 0.92 | 0.69 | 530 | 1.672 | 10.8 | 1.621 | 0.051 | Comparative Example |
| 48 | 80 | 200 | 76 | 3.5 | 800 | 26.2 | 14.4 | 9.2 | 0.55 | 0.64 | 530 | 1.667 | 11.8 | 1.608 | 0.056 | Comparative Example |
| 49 | 80 | 200 | 85 | 4.0 | 810 | 25.9 | 22.0 | 14.8 | 0.85 | 0.67 | 530 | 1.669 | 11.9 | 1.617 | 0.052 | Comparative Example |

Table 1-3

| № | Heat treatment before final cold rolling | | 1st pass of final cold rolling | | Cold-band annealing temp. (°C) | Steel sheet properties after cold-band annealing | | | | | | | | Steel sheet properties after core annealing | | Remarks |
|---|---|---|---|---|---|---|---|---|---|---|---|---|---|---|---|---|
| | Cooling temp. (°C) | Heating temp. (°C) | Bite temp. (°C) | Surface roughness Ra(μm) of WR | | Average crystal grain size (μm) | | | Crystal grain size ratio | | Fatigue strength (MPa) | Magnetic flux density $B_{50}$ (T) | Iron loss $W_{10/400}$ (W/kg) | Magnetic flux density $B_{50}$ (T) | Deterioration margin $\Delta B_{50}$(T) of magnetic flux density | |
| | | | | | | All orientations D1 | {411} <148> orientation D2 | {211} <011> orientation D3 | D2/D1 | D3/D1 | | | | | | |
| 50 | 80 | 200 | 56 | 0.5 | 600 | Not measurable due to remaining non-recrystallized texture | | | | | 650 | 1.511 | 20.2 | 1.509 | 0.002 | Comparative Example |
| 51 | 80 | 200 | 56 | 0.5 | 670 | Not measurable due to remaining non-recrystallized texture | | | | | 620 | 1.525 | 19.3 | 1.524 | 0.001 | Comparative Example |
| 52 | 80 | 200 | 57 | 0.5 | 780 | 18.4 | 19.1 | 12.2 | 1.04 | 0.64 | 550 | 1.668 | 10.4 | 1.621 | 0.018 | Invention Example |
| 53 | 80 | 200 | 62 | 0.5 | 830 | 29.8 | 33.4 | 21.7 | 1.12 | 0.65 | 520 | 1.673 | 10.5 | 1.625 | 0.019 | Invention Example |
| 54 | 80 | 200 | 60 | 0.5 | 870 | 57.1 | 66.8 | 49.4 | 1.17 | 0.74 | 510 | 1.669 | 10.1 | 1.623 | 0.022 | Invention Example |
| 55 | 80 | 200 | 62 | 0.5 | 935 | 65.5 | 79.9 | 52.7 | 1.22 | 0.66 | 490 | 1.675 | 10.3 | 1.615 | 0.016 | Invention Example |
| 56 | 80 | 200 | 64 | 0.5 | 980 | 120.5 | 144.6 | 96.9 | 1.20 | 0.67 | 420 | 1.720 | 9.5 | 1.715 | 0.005 | Comparative Example |
| 57 | 80 | 200 | 63 | 0.5 | 1050 | 150.2 | 172.7 | 114.0 | 1.15 | 0.66 | 380 | 1.735 | 9.4 | 1.732 | 0.003 | Comparative Example |
| 58 | 80 | 140 | 62 | 0.06 | 750 | 15.5 | 16.0 | 10.1 | 1.03 | 0.65 | 550 | 1.660 | 11.4 | 1.622 | 0.038 | Invention Example |
| 59 | 80 | 140 | 40 | 0.06 | 750 | 15.9 | 16.7 | 11.0 | 1.05 | 0.69 | 550 | 1.662 | 11.3 | 1.627 | 0.035 | Invention Example |
| 60 | 80 | 140 | 62 | 0.2 | 750 | 16.2 | 17.3 | 11.5 | 1.07 | 0.71 | 550 | 1.668 | 10.9 | 1.635 | 0.033 | Invention Example |

| № | Heat treatment before final cold rolling | | 1st pass of final cold rolling | | Cold-band annealing temp. (°C) | Steel sheet properties after cold-band annealing | | | | | Fatigue strength (MPa) | Magnetic flux density B₅₀ (T) | Steel sheet properties after core annealing | | | Remarks |
|---|---|---|---|---|---|---|---|---|---|---|---|---|---|---|---|---|
| | Cooling temp. (°C) | Heating temp. (°C) | Bite temp. (°C) | Surface roughness Ra(μm) of WR | | Average crystal grain size (μm) | | | Crystal grain size ratio | | | | Iron loss W₁₀/₄₀₀ (W/kg) | Magnetic flux density B₅₀ (T) | Deterioration margin $\Delta B_{50}$(T) of magnetic flux density | |
| | | | | | | All orientations D1 | {411} <148> orientation D2 | {211} <011> orientation D3 | D2/D1 | D3/D1 | | | | | | |
| 51 | 80 | 140 | 62 | 0.2 | 750 | 16.3 | 17.9 | 9.9 | 1.10 | 0.61 | 550 | 1.665 | 10.8 | 1.632 | 0.033 | Invention Example |
| 52 | 80 | 140 | 62 | 0.06 | 800 | 27.1 | 28.2 | 16.8 | 1.04 | 0.62 | 530 | 1.668 | 10.9 | 1.640 | 0.030 | Invention Example |
| 63 | 80 | 200 | 40 | 0.06 | 750 | 16.1 | 16.7 | 10.5 | 1.04 | 0.65 | 550 | 1.667 | 10.7 | 1.637 | 0.029 | Invention Example |
| 64 | 80 | 200 | 62 | 0.2 | 750 | 15.5 | 16.3 | 10.9 | 1.05 | 0.70 | 550 | 1.665 | 11.0 | 1.637 | 0.028 | Invention Example |
| 55 | 80 | 140 | 40 | 0.2 | 750 | 16.5 | 20.0 | 11.9 | 1.15 | 0.72 | 550 | 1.670 | 10.8 | 1.647 | 0.023 | Invention Example |
| 56 | 80 | 140 | 40 | 0.06 | 800 | 27.5 | 33.1 | 17.9 | 1.20 | 0.65 | 530 | 1.672 | 10.5 | 1.651 | 0.021 | Invention Example |
| 67 | 80 | 140 | 62 | 0.2 | 800 | 28.1 | 34.0 | 21.1 | 1.21 | 0.75 | 530 | 1.672 | 10.6 | 1.654 | 0.018 | Invention Example |
| 58 | 80 | 200 | 40 | 0.2 | 800 | 28.3 | 42.4 | 22.6 | 1.50 | 0.80 | 540 | 1.675 | 10.2 | 1.670 | 0.005 | Invention Example |

Example 2

A steel slab having an ingredient composition including various ingredients shown in Tables 2 with the balance being Fe and unavoidable impurities was produced by the continuous casting method. The steel slab was then heated to a temperature of 1100°C for 20 minutes and hot rolled at a finishing rolling end temperature of 750°C and winding temperature of 700°C to obtain a hot-rolled sheet with a thickness of 2.5 mm. The hot-rolled sheet was then subjected to hot-band annealing at 1000°C for 30 seconds, cooled to the temperature shown in Tables 3, pickled, and subjected to cold rolling (final cold rolling) once under the conditions shown in Tables 3 to produce a cold-rolled sheet with various final thicknesses. In the first pass of the final cold rolling, the surface roughness Ra of the work roll and the bite temperature were varied as shown in Tables 3. The cold-rolled sheet was then subjected to cold-band annealing at 850°C for 10 seconds in a reducing atmosphere containing $H_2:N_2$ = 20:80 as a vol% ratio and having a dew point of -40°C and coated with an insulation coating to obtain a cold-rolled annealed sheet. The cold-rolled annealed sheet was then subjected to heat treatment at 825°C for 1 hour by simulating core annealing (stress-relief annealing) in a reducing atmosphere containing the gas composition shown in Tables 3 and having a dew point of - 40°C to obtain a core annealed sheet.

The thus-obtained cold-rolled annealed sheet and core-annealed sheet were subjected to evaluation tests similar to those in Example 1, the results of which are also shown in Tables 3. The iron loss properties after the core annealing were evaluated as excellent when the iron loss $W_{10/400}$ of the steel sheet with a thickness of 0.15 mm is 8.8 W/kg or less, 0.20 mm is 10.3 W/kg or less, 0.25 mm is 11.5 W/kg or less, and 0.30 mm is 12.5 W/kg or less.

Tables 2 and 3 show the following results.

The steel sheets of the invention examples produced by using, as a material, a slab with the ingredient composition in accordance with the conditions of the present invention under conditions in accordance with the present invention all satisfy the features of the present invention. That is, the resulting steel sheets each satisfy the following conditions that the fatigue strength of the steel sheet after the cold-band annealing is 470 MPa or more, the iron loss $W_{10/400}$ of the steel sheet after the core annealing satisfies the reference value, and that the magnetic flux density deterioration margin $\Delta B_{50}$ of the steel sheet by the core annealing is 0.04 T or less.

In particular, the iron loss of each of the steel sheets No. 26 and No. 27 produced with the active addition of Cr is significantly reduced after the core annealing due to the increased specific resistance.

The iron loss of each of the steel sheets No. 28 to No. 32 produced with the active additions of Ca, Mg, and REM is significantly reduced after the core annealing due to sulfide coarsened to be detoxified in the steel sheet.

The magnetic flux density of each of the steel sheets No. 33 and No. 34 produced with the active additions of Sn and Sb is significantly improved due to the improved texture after cold-band annealing.

The magnetic flux density of the steel sheet No. 35 produced with the active addition of Ni is significantly increased due to the increased content of magnetic elements.

The fatigue strength of each of the steel sheets No. 36 to No. 39 produced with the active additions of Cu, Nb, Ti, and V is significantly increased after cold-band annealing due to the formation of precipitates.

The iron loss of each of the steel sheets No. 40 to No. 42 produced with the active additions of Ca, Mg, REM, and a combination of Sn and Sb is improved after the core annealing due to S in steel fixed as sulfide, and the magnetic flux density is increased.

The fatigue strength after cold-band annealing of each of the steel sheets No. 43 to No. 49 with the active addition of at least one selected from the group consisting of Ta, B, Ga, Pb, Zn, Mo, and W is significantly improved due to the formation of fine precipitates.

The magnetic flux density of each of the steel sheets No. 50 to No. 52 produced with the addition of at least one selected from the group consisting of Ge, As, and Co is significantly increased.

In contrast, in the steel sheet of the comparative example, specifically, the steel sheet No. 1 with a C content exceeding 0.0050 mass%, the iron loss is increased after the core annealing due to carbide precipitated on the grain boundaries after the core annealing.

The magnetic flux density of the steel sheet No. 7 with a C content of less than 0.0005 mass% is significantly reduced. This is because the nucleation of the crystal grains with the orientation {411}<148> during the cold rolling was insufficient so that the appropriate structure was not formed after the cold-band annealing.

The steel sheets No. 8 and No. 17 with Si and P contents exceeding 5.0 mass% and 0.1 mass%, respectively, are not commercialized due to fractures caused during the cold rolling.

The iron loss of the steel sheet No. 12 with a Si content of less than 1.0 mass% is high after the core annealing due to the low specific resistance of steel.

The iron loss of the steel sheet of No. 13 with a Mn content exceeding 5.0 mass% is increased after the core annealing due to carbide precipitated on the grain boundaries after the core annealing.

Meanwhile, the iron loss value of the steel sheet of No. 15 with a Mn content of less than 0.05 mass% is high after the core annealing due to insufficient specific resistance.

The iron loss of the steel sheet No. 19 with a S content exceeding 0.01 mass% is increased after the core annealing, because a large number of sulfides were precipitated and hindered the grain growth during the core annealing.

The iron loss of the steel sheet of No. 20 with an Al content exceeding 3.0 mass% is increased after the core annealing because the steel sheet surface was nitrided during the core annealing.

The iron loss of the steel sheet No. 24 with a N content exceeding 0.01 mass% is increased after the core annealing because fine nitrides were precipitated in the steel sheet during the core annealing.

Table 2-1

| Steel symbol | Ingredient composition (mass%) | | | | | | | | | | | | | | | | | | Remarks |
|---|---|---|---|---|---|---|---|---|---|---|---|---|---|---|---|---|---|---|---|---|
| | C | Si | Mn | P | S | Al | N | Cr | Ca | Mg | REM | Sn | Sb | Ni | Cu | Nb | Ti | V | Others | |
| A | 0.0061 | 3.43 | 0.47 | 0.0048 | 0.0017 | 0.73 | 0.0030 | − | − | − | − | − | − | − | − | − | − | − | − | Comparative Steel |
| B | 0.0045 | 3.40 | 0.52 | 0.0048 | 0.0019 | 0.73 | 0.0024 | − | − | − | − | − | − | − | − | − | − | − | − | Invention Steel |
| C | 0.0032 | 3.41 | 0.53 | 0.0048 | 0.0014 | 0.65 | 0.0012 | − | − | − | − | − | − | − | − | − | − | − | − | Invention Steel |
| D | 0.0018 | 3.43 | 0.52 | 0.0059 | 0.0021 | 0.69 | 0.0016 | − | − | − | − | − | − | − | − | − | − | − | − | Invention Steel |
| E | 0.0003 | 3.38 | 0.51 | 0.0051 | 0.0015 | 0.74 | 0.0026 | − | − | − | − | − | − | − | − | − | − | − | − | Comparative Steel |
| F | 0.0027 | 6.20 | 0.56 | 0.0048 | 0.0017 | 0.68 | 0.0021 | − | − | − | − | − | − | − | − | − | − | − | − | Comparative Steel |
| G | 0.0038 | 4.80 | 0.55 | 0.0047 | 0.0027 | 0.74 | 0.0019 | − | − | − | − | − | − | − | − | − | − | − | − | Invention Steel |
| H | 0.0033 | 2.80 | 0.46 | 0.0050 | 0.0011 | 0.71 | 0.0028 | − | − | − | − | − | − | − | − | − | − | − | − | Invention Steel |
| I | 0.0026 | 2.10 | 0.51 | 0.0045 | 0.0030 | 0.74 | 0.0027 | − | − | − | − | − | − | − | − | − | − | − | − | Invention Steel |
| J | 0.0040 | 0.60 | 0.50 | 0.0051 | 0.0012 | 0.65 | 0.0015 | − | − | − | − | − | − | − | − | − | − | − | − | Comparative Steel |
| K | 0.0044 | 3.67 | 5.8 | 0.0056 | 0.0011 | 0.66 | 0.0015 | − | − | − | − | − | − | − | − | − | − | − | − | Comparative Steel |
| L | 0.0035 | 3.37 | 0.20 | 0.0050 | 0.0023 | 0.73 | 0.0024 | − | − | − | − | − | − | − | − | − | − | − | − | Invention Steel |
| M | 0.0027 | 3.49 | 0.03 | 0.0045 | 0.0011 | 0.65 | 0.0029 | − | − | − | − | − | − | − | − | − | − | − | − | Comparative Steel |
| N | 0.0035 | 3.40 | 0.50 | 0.018 | 0.0015 | 0.67 | 0.0010 | − | − | − | − | − | − | − | − | − | − | − | − | Invention Steel |
| O | 0.0020 | 3.18 | 0.56 | 0.20 | 0.0013 | 0.67 | 0.0011 | − | − | − | − | − | − | − | − | − | − | − | − | Comparative Steel |
| P | 0.0034 | 3.41 | 0.51 | 0.0051 | 0.005 | 0.64 | 0.0013 | − | − | − | − | − | − | − | − | − | − | − | − | Invention Steel |
| Q | 0.0024 | 3.18 | 0.50 | 0.0052 | 0.020 | 0.72 | 0.0019 | − | − | − | − | − | − | − | − | − | − | − | − | Comparative Steel |
| R | 0.0024 | 3.15 | 0.49 | 0.0048 | 0.0023 | 3.5 | 0.0022 | − | − | − | − | − | − | − | − | − | − | − | − | Comparative Steel |
| S | 0.0045 | 3.78 | 0.50 | 0.0055 | 0.0026 | 1.5 | 0.0010 | − | − | − | − | − | − | − | − | − | − | − | − | Invention Steel |
| T | 0.0030 | 3.30 | 0.49 | 0.0050 | 0.0021 | 0.20 | 0.0029 | − | − | − | − | − | − | − | − | − | − | − | − | Invention Steel |
| U | 0.0033 | 3.75 | 0.52 | 0.0045 | 0.0029 | 0.01 | 0.0021 | − | − | − | − | − | − | − | − | − | − | − | − | Invention Steel |
| V | 0.0036 | 3.66 | 0.51 | 0.0055 | 0.0020 | 0.65 | 0.0120 | − | − | − | − | − | − | − | − | − | − | − | − | Comparative Steel |
| W | 0.0040 | 3.37 | 0.54 | 0.0048 | 0.0013 | 0.65 | 0.0030 | − | − | − | − | − | − | − | − | − | − | − | − | Invention Steel |

Table 2-2

| Steel Symbol | Ingredient composition (mass%) | | | | | | | | | | | | | | | | | | Remarks |
|---|---|---|---|---|---|---|---|---|---|---|---|---|---|---|---|---|---|---|---|---|
| | C | Si | Mn | P | S | Al | N | Cr | Ca | Mg | REM | Sn | Sb | Ni | Cu | Nb | Ti | V | Others | |
| X | 0.0036 | 3.43 | 0.45 | 0.0049 | 0.0019 | 0.65 | 0.0021 | 2.0 | − | − | − | − | − | − | − | − | − | − | − | Invention Steel |
| Y | 0.0026 | 3.40 | 0.49 | 0.0046 | 0.0012 | 0.73 | 0.0022 | − | 0.003 | − | − | − | − | − | − | − | − | − | − | Invention Steel |
| Z | 0.0030 | 3.36 | 0.45 | 0.0051 | 0.0022 | 0.74 | 0.0014 | − | − | 0.007 | − | − | − | − | − | − | − | − | − | Invention Steel |
| AA | 0.0033 | 3.40 | 0.55 | 0.0052 | 0.0024 | 0.69 | 0.0019 | − | − | − | 0.009 | − | − | − | − | − | − | − | − | Invention Steel |
| AB | 0.0040 | 3.45 | 0.54 | 0.0046 | 0.0019 | 0.69 | 0.0018 | − | − | − | − | 0.03 | − | − | − | − | − | − | − | Invention Steel |
| AC | 0.0032 | 3.40 | 0.52 | 0.0050 | 0.0020 | 0.70 | 0.0029 | − | − | − | − | − | 0.04 | − | − | − | − | − | − | Invention Steel |
| AD | 0.0040 | 3.38 | 0.52 | 0.0053 | 0.0016 | 0.73 | 0.0018 | − | − | − | − | − | − | 0.2 | − | − | − | − | − | Invention Steel |
| AE | 0.0031 | 3.44 | 0.47 | 0.0045 | 0.0024 | 0.66 | 0.0012 | − | − | − | − | − | − | − | 0.2 | − | − | − | − | Invention Steel |
| AF | 0.0021 | 3.38 | 0.55 | 0.0053 | 0.0015 | 0.72 | 0.0010 | − | − | − | − | − | − | − | − | 0.025 | − | − | − | Invention Steel |
| AG | 0.0018 | 3.43 | 0.51 | 0.0047 | 0.0028 | 0.69 | 0.0017 | − | − | − | − | − | − | − | − | − | 0.017 | − | − | Invention Steel |
| AH | 0.0042 | 3.43 | 0.53 | 0.0049 | 0.0015 | 0.73 | 0.0018 | − | − | − | − | − | − | − | − | − | − | 0.049 | − | Invention Steel |
| AI | 0.0033 | 3.43 | 0.45 | 0.0051 | 0.0023 | 0.65 | 0.0022 | − | 0.007 | − | − | 0.03 | − | − | − | − | − | − | − | Invention Steel |
| AJ | 0.0022 | 3.40 | 0.50 | 0.0053 | 0.0020 | 0.72 | 0.0010 | − | − | − | 0.003 | 0.15 | − | − | − | − | − | − | − | Invention Steel |
| AK | 0.0023 | 3.36 | 0.45 | 0.0046 | 0.0023 | 0.67 | 0.0017 | − | 0.002 | 0.003 | − | − | 0.05 | − | − | − | − | − | − | Invention Steel |
| AL | 0.0021 | 3.36 | 0.48 | 0.0056 | 0.0014 | 0.68 | 0.0022 | − | − | − | − | − | − | − | − | − | − | − | Ta:0.0011 | Invention Steel |
| AM | 0.0020 | 3.37 | 0.49 | 0.0055 | 0.0014 | 0.69 | 0.0020 | − | − | − | − | − | − | − | − | − | − | − | B: 0.0013 | Invention Steel |
| AN | 0.0020 | 3.37 | 0.48 | 0.0053 | 0.0014 | 0.68 | 0.0019 | − | − | − | − | − | − | − | − | − | − | − | Ga:0.0036 | Invention Steel |
| AO | 0.0018 | 3.38 | 0.49 | 0.0055 | 0.0017 | 0.69 | 0.0021 | − | − | − | − | − | − | − | − | − | − | − | Pb:0.0014 | Invention Steel |
| AP | 0.0018 | 3.38 | 0.48 | 0.0056 | 0.0013 | 0.67 | 0.0019 | − | − | − | − | − | − | − | − | − | − | − | Zn:0.003 | Invention Steel |
| AQ | 0.0019 | 3.35 | 0.48 | 0.0052 | 0.0017 | 0.68 | 0.0020 | − | − | − | − | − | − | − | − | − | − | − | Mo:0.03 | Invention Steel |
| AR | 0.0022 | 3.36 | 0.48 | 0.0054 | 0.0015 | 0.70 | 0.0021 | − | − | − | − | − | − | − | − | − | − | − | W:0.03 | Invention Steel |
| AS | 0.0019 | 3.37 | 0.49 | 0.0053 | 0.0013 | 0.68 | 0.0019 | − | − | − | − | − | − | − | − | − | − | − | Ge:0.03 | Invention Steel |
| AT | 0.0021 | 3.36 | 0.50 | 0.0055 | 0.0016 | 0.70 | 0.0022 | − | − | − | − | − | − | − | − | − | − | − | As:0.03 | Invention Steel |
| AU | 0.0018 | 3.36 | 0.50 | 0.0055 | 0.0013 | 0.67 | 0.0019 | − | − | − | − | − | − | − | − | − | − | − | Co:0.02 | Invention Steel |

Table 3-1

| Test No. | Steel symbol | Heat treatment before final cold rolling | | 1st pass of final cold rolling | | Final thickness of cold rolling (mm) | Cold-band annealing temp. (°C) | Steel sheet properties after cold-band annealing | | | | | | | $H_2:N_2$ (vol% ratio) of atmosphere in core annealing | Steel sheet properties after core annealing | | | Remarks |
|---|---|---|---|---|---|---|---|---|---|---|---|---|---|---|---|---|---|---|---|
| | | Cooling temp. (°C) | Heating temp. (°C) | Bite temp. (°C) | Surface roughness Ra ($\mu$m) of WR | | | Average crystal grain size ($\mu$m) | | | Crystal grain size ratio | | Fatigue strength (MPa) | Magnetic flux density $B_{50}(T)$ | | Iron loss $W_{10/400}$ (W/kg) | Magnetic flux density $B_{50}(T)$ | Deterioration margin $\Delta B_{50}(T)$ of magnetic flux density | |
| | | | | | | | | All orientations D1 | {411}<148> orientation D2 | {211}<011> orientation D3 | D2/D1 | D3/D1 | | | | | | | |
| 1 | A | 80 | 200 | 58 | 0.5 | 0.25 | 810 | 31.6 | 35.6 | 22.8 | 1.13 | 0.72 | 550 | 1.662 | 20:80 | 12.5 | 1.650 | 0.012 | Comparative Example |
| 2 | B | 80 | 200 | 58 | 0.5 | 0.25 | 790 | 28.4 | 31.4 | 19.6 | 1.11 | 0.69 | 540 | 1.667 | 20:80 | 10.4 | 1.651 | 0.016 | Invention Example |
| 3 | B | 80 | 200 | 58 | 0.5 | 0.25 | 800 | 29.2 | 32.8 | 21.0 | 1.12 | 0.72 | 540 | 1.668 | 0:100 | 10.5 | 1.652 | 0.016 | Invention Example |
| 4 | C | 80 | 200 | 56 | 0.5 | 0.25 | 800 | 33.4 | 35.2 | 22.4 | 1.05 | 0.67 | 540 | 1.666 | 20:80 | 10.2 | 1.645 | 0.021 | Invention Example |
| 5 | C | 80 | 200 | 56 | 0.5 | 0.25 | 810 | 35.4 | 37.5 | 27.6 | 1.06 | 0.78 | 540 | 1.667 | 0:100 | 10.2 | 1.644 | 0.023 | Invention Example |
| 6 | D | 80 | 200 | 55 | 0.5 | 0.25 | 810 | 29.7 | 30.6 | 21.7 | 1.03 | 0.73 | 540 | 1.658 | 20:80 | 10.3 | 1.633 | 0.025 | Invention Example |
| 7 | E | 80 | 200 | 63 | 0.5 | 0.25 | 790 | 31.7 | 24.3 | 24.1 | 0.77 | 0.76 | 530 | 1.661 | 20:80 | 11.9 | 1.611 | 0.050 | Comparative Example |
| 8 | F | 80 | 200 | 60 | 0.5 | 0.30 | Cannot be performed due to sheet fractured during cold rolling | | | | | | | | | | | | Comparative Example |
| 9 | G | 80 | 200 | 58 | 0.5 | 0.30 | 810 | 24.2 | 28.0 | 16.5 | 1.16 | 0.68 | 610 | 1.592 | 20:80 | 10.2 | 1.563 | 0.029 | Invention Example |

(continued)

| Test No. | Steel symbol | Heat treatment before final cold rolling | | 1st pass of final cold rolling | | Final thickness of cold rolling (mm) | Cold-band annealing temp. (°C) | Steel sheet properties after cold-band annealing | | | | | | | $H_2:N_2$ (vol% ratio) of atmosphere in core annealing | Steel sheet properties after core annealing | | | Remarks |
|---|---|---|---|---|---|---|---|---|---|---|---|---|---|---|---|---|---|---|---|
| | | Cooling temp. (°C) | Heating temp. (°C) | Bite temp. (°C) | Surface roughness Ra (μm) of WR | | | Average crystal grain size (μm) | | | Crystal grain size ratio | | Fatigue strength (MPa) | Magnetic flux density $B_{50}(T)$ | | Iron loss $W_{10/400}$ (W/kg) | Magnetic flux density $B_{50}(T)$ | Deterioration margin $\Delta B_{50}(T)$ of magnetic flux density | |
| | | | | | | | | All orientations D1 | {411}<148> orientation D2 | {211}<011> orientation D3 | D2/D1 | D3/D1 | | | | | | | |
| 10 | H | 80 | 200 | 57 | 0.5 | 0.30 | 790 | 29.6 | 32.3 | 20.4 | 1.09 | 0.69 | 510 | 1.689 | 20:80 | 10.5 | 1.654 | 0.035 | Invention Example |
| 11 | I | 80 | 200 | 63 | 0.5 | 0.30 | 800 | 32.2 | 35.8 | 21.3 | 1.11 | 0.66 | 480 | 1.701 | 20:80 | 10.3 | 1.674 | 0.027 | Invention Example |
| 12 | J | 80 | 200 | 55 | 0.5 | 0.30 | 790 | 23.1 | 25.9 | 16.2 | 1.12 | 0.70 | 390 | 1.732 | 20:80 | 15.2 | 1.710 | 0.022 | Comparative Example |
| 13 | K | 80 | 200 | 62 | 0.5 | 0.20 | 790 | 24.6 | 25.7 | 17.7 | 1.05 | 0.72 | 560 | 1.420 | 20:80 | 12.3 | 1.405 | 0.015 | Comparative Example |
| 14 | L | 80 | 200 | 57 | 0.5 | 0.20 | 790 | 31.7 | 36.6 | 23.5 | 1.16 | 0.74 | 530 | 1.657 | 20:80 | 10.2 | 1.644 | 0.013 | Invention Example |
| 15 | M | 80 | 200 | 57 | 0.5 | 0.20 | 810 | 25.9 | 27.8 | 17.1 | 1.07 | 0.66 | 480 | 1.658 | 20:80 | 12.3 | 1.645 | 0.013 | Comparative Example |
| 16 | N | 80 | 200 | 55 | 0.5 | 0.25 | 800 | 32.8 | 35.6 | 22.5 | 1.08 | 0.69 | 560 | 1.668 | 20:80 | 10.1 | 1.658 | 0.010 | Invention Example |
| 17 | O | 80 | 200 | 60 | 0.5 | 0.25 | Cannot be performed due to sheet fractured during cold rolling | | | | | | | | | | | | | Comparative Example |
| 18 | P | 80 | 200 | 56 | 0.5 | 0.25 | 800 | 33.6 | 35.9 | 22.7 | 1.07 | 0.68 | 540 | 1.667 | 20:80 | 10.3 | 1.654 | 0.013 | Invention Example |

(continued)

| Test No. | Steel symbol | Heat treatment before final cold rolling — Cooling temp. (°C) | Heating temp. (°C) | 1st pass of final cold rolling — Bite temp. (°C) | Surface roughness Ra (μm) of WR | Final thickness of cold rolling (mm) | Cold-band annealing temp. (°C) | Steel sheet properties after cold-band annealing — Average crystal grain size (μm) All orientations D1 | {411}<148> orientation D2 | {211}<011> orientation D3 | Crystal grain size ratio D2/D1 | D3/D1 | Fatigue strength (MPa) | Magnetic flux density B50(T) | H2:N2 (vol% ratio) of atmosphere in core annealing | Steel sheet properties after core annealing — Iron loss W10/400 (W/kg) | Magnetic flux density B50(T) | Deterioration margin ΔB50(T) of magnetic flux density | Remarks |
|---|---|---|---|---|---|---|---|---|---|---|---|---|---|---|---|---|---|---|---|
| 19 | Q | 80 | 200 | 55 | 0.5 | 0.25 | 790 | 36.5 | 40.3 | 24.8 | 1.10 | 0.68 | 540 | 1.657 | 20:80 | 13.7 | 1.624 | 0.033 | Comparative Example |
| 20 | R | 80 | 200 | 55 | 0.5 | 0.15 | 790 | 23.9 | 28.0 | 17.9 | 1.17 | 0.75 | 660 | 1.657 | 20:80 | 11.2 | 1.643 | 0.014 | Comparative Example |
| 21 | S | 80 | 200 | 60 | 0.5 | 0.15 | 790 | 29.7 | 31.1 | 19.9 | 1.05 | 0.67 | 570 | 1.663 | 20:80 | 7.9 | 1.652 | 0.011 | Invention Example |
| 22 | T | 80 | 200 | 61 | 0.5 | 0.15 | 800 | 33.1 | 34.9 | 22.2 | 1.06 | 0.67 | 510 | 1.653 | 20:80 | 8.2 | 1.636 | 0.017 | Invention Example |
| 23 | U | 80 | 200 | 64 | 0.5 | 0.15 | 810 | 25.8 | 26.7 | 16.8 | 1.03 | 0.65 | 490 | 1.653 | 20:80 | 8.5 | 1.643 | 0.010 | Invention Example |
| 24 | V | 80 | 200 | 62 | 0.5 | 0.25 | 790 | 27.4 | 31.5 | 20.6 | 1.15 | 0.75 | 540 | 1.662 | 20:80 | 11.7 | 1.628 | 0.034 | Comparative Example |
| 25 | W | 80 | 200 | 55 | 0.5 | 0.15 | 810 | 28.5 | 30.7 | 21.9 | 1.08 | 0.77 | 530 | 1.654 | 20:80 | 8.6 | 1.630 | 0.024 | Invention Example |

Table 3-2

| Test No. | Steel symbol | Heat treatment before final cold rolling | | 1st pass of final cold rolling | | Final thick-ness of cold roll-ing (mm) | Cold-band an-nealing temp. (°C) | Steel sheet properties after cold-band annealing | | | | | | | $H_2:N_2$ (vol% ra-tio) of at-mosphere in core an-nealing | Steel sheet properties after core annealing | | | Re-marks |
|---|---|---|---|---|---|---|---|---|---|---|---|---|---|---|---|---|---|---|---|
| | | Cool-ing temp. (°C) | Heat-ing temp. (°C) | Bite temp. (°C) | Surface rough-ness Ra ($\mu$m) of WR | | | Average crystal grain size ($\mu$m) | | | Crystal grain size ratio | | Fa-tigue strength (MPa) | Magnet-ic flux density $B_{50}(T)$ | | Iron loss $W_{10/400}$ (W/kg) | Magnet-ic flux density $B_{50}(T)$ | Deteriora-tion margin $\Delta B_{50}(T)$ of magnetic flux density | |
| | | | | | | | | All orien-tations D1 | {411} <148> orienta-tion D2 | {211} <011> orienta-tion D3 | D2/ D1 | D3/ D1 | | | | | | | |
| 26 | X | 80 | 200 | 64 | 0.5 | 0.25 | 790 | 24.1 | 26.3 | 15.9 | 1.09 | 0.66 | 530 | 1.660 | 20:80 | 9.9 | 1.636 | 0.024 | Inven-tion Ex-ample |
| 27 | X | 80 | 200 | 64 | 0.5 | 0.25 | 800 | 27.2 | 29.4 | 20.4 | 1.08 | 0.75 | 530 | 1.663 | 0:100 | 10.0 | 1.635 | 0.028 | Inven-tion Ex-ample |
| 28 | Y | 80 | 200 | 55 | 0.5 | 0.25 | 800 | 31.1 | 35.5 | 20.2 | 1.14 | 0.65 | 530 | 1.667 | 20:80 | 9.9 | 1.650 | 0.017 | Inven-tion Ex-ample |
| 29 | Y | 80 | 200 | 55 | 0.5 | 0.25 | 820 | 43.2 | 48.0 | 33.3 | 1.11 | 0.77 | 530 | 1.669 | 0:100 | 10.0 | 1.655 | 0.014 | Inven-tion Ex-ample |
| 30 | Z | 80 | 200 | 60 | 0.5 | 0.25 | 800 | 28.9 | 30.1 | 19.9 | 1.04 | 0.69 | 530 | 1.653 | 20:80 | 9.9 | 1.621 | 0.032 | Inven-tion Ex-ample |
| 31 | Z | 80 | 200 | 60 | 0.5 | 0.25 | 820 | 35.8 | 39.4 | 25.8 | 1.10 | 0.72 | 530 | 1.658 | 0:100 | 10.1 | 1.625 | 0.033 | Inven-tion Ex-ample |
| 32 | AA | 80 | 200 | 62 | 0.5 | 0.25 | 810 | 27.8 | 29.2 | 19.5 | 1.05 | 0.70 | 530 | 1.651 | 20:80 | 9.8 | 1.620 | 0.031 | Inven-tion Ex-ample |

| Test No. | Steel symbol | Heat treatment before final cold rolling | | 1st pass of final cold rolling | | Final thickness of cold rolling (mm) | Cold-band annealing temp. (°C) | Steel sheet properties after cold-band annealing | | | | | | | H₂:N₂ (vol% ratio) of atmosphere in core annealing | Steel sheet properties after core annealing | | | Remarks |
|---|---|---|---|---|---|---|---|---|---|---|---|---|---|---|---|---|---|---|---|
| | | Cooling temp. (°C) | Heating temp. (°C) | Bite temp. (°C) | Surface roughness Ra (μm) of WR | | | Average crystal grain size (μm) | | | Crystal grain size ratio | | Fatigue strength (MPa) | Magnetic flux density $B_{50}$(T) | | Iron loss $W_{10/400}$ (W/kg) | Magnetic flux density $B_{50}$(T) | Deterioration margin $\Delta B_{50}$(T) of magnetic flux density | |
| | | | | | | | | All orientations D1 | {411}<148> orientation D2 | {211}<011> orientation D3 | D2/D1 | D3/D1 | | | | | | | |
| 33 | AB | 80 | 200 | 55 | 0.5 | 0.25 | 790 | 23.3 | 24.8 | 17.9 | 1.06 | 0.77 | 530 | 1.681 | 20:80 | 9.6 | 1.663 | 0.018 | Invention Example |
| 34 | AC | 80 | 200 | 61 | 0.5 | 0.25 | 800 | 31.8 | 36.0 | 24.8 | 1.13 | 0.78 | 530 | 1.688 | 20:80 | 9.7 | 1.660 | 0.028 | Invention Example |
| 35 | AD | 80 | 200 | 64 | 0.25 | 0.25 | 810 | 29.5 | 31.1 | 22.7 | 1.05 | 0.77 | 560 | 1.690 | 20:80 | 9.6 | 1.664 | 0.026 | Invention Example |
| 36 | AE | 80 | 200 | 58 | 0.25 | 0.25 | 810 | 27.6 | 29.2 | 20.4 | 1.06 | 0.74 | 570 | 1.668 | 20:80 | 10.6 | 1.634 | 0.034 | Invention Example |
| 37 | AF | 80 | 200 | 62 | 0.25 | 0.25 | 800 | 33.9 | 37.4 | 23.4 | 1.10 | 0.69 | 560 | 1.657 | 20:80 | 10.7 | 1.641 | 0.016 | Invention Example |
| 38 | AG | 80 | 200 | 55 | 0.25 | 0.25 | 790 | 31.3 | 33.6 | 22.5 | 1.07 | 0.72 | 560 | 1.668 | 20:80 | 10.6 | 1.657 | 0.011 | Invention Example |
| 39 | AH | 80 | 200 | 63 | 0.25 | 0.25 | 790 | 24.5 | 25.7 | 18.4 | 1.05 | 0.75 | 560 | 1.665 | 20:80 | 10.4 | 1.636 | 0.029 | Invention Example |

EP 4 400 610 A1

| Test No. | Steel symbol | Heat treatment before final cold rolling | | 1st pass of final cold rolling | | Final thickness of cold rolling (mm) | Cold-band annealing temp. (°C) | Steel sheet properties after cold-band annealing | | | | | | | H₂:N₂ (vol% ratio) of atmosphere in core annealing | Steel sheet properties after core annealing | | | Remarks |
|---|---|---|---|---|---|---|---|---|---|---|---|---|---|---|---|---|---|---|---|
| | | Cooling temp. (°C) | Heating temp. (°C) | Bite temp. (°C) | Surface roughness Ra (μm) of WR | | | Average crystal grain size (μm) | | | Crystal grain size ratio | | Fatigue strength (MPa) | Magnetic flux density $B_{50}$(T) | | Iron loss $W_{10/400}$ (W/kg) | Magnetic flux density $B_{50}$(T) | Deterioration margin $\Delta B_{50}$(T) of magnetic flux density | |
| | | | | | | | | All orientations D1 | {411}<148> orientation D2 | {211}<011> orientation D3 | D2/D1 | D3/D1 | | | | | | | |
| 40 | AI | 80 | 200 | 62 | 0.25 | 0.25 | 790 | 25.9 | 27.8 | 19.4 | 1.07 | 0.75 | 540 | 1.688 | 20:80 | 9.5 | 1.664 | 0.024 | Invention Example |
| 41 | AJ | 80 | 200 | 64 | 0.25 | 0.25 | 810 | 24.1 | 26.3 | 16.1 | 1.09 | 0.67 | 540 | 1.685 | 20:80 | 9.4 | 1.656 | 0.029 | Invention Example |
| 42 | AK | 80 | 200 | 58 | 0.25 | 0.25 | 790 | 25.1 | 27.3 | 16.8 | 1.09 | 0.67 | 530 | 1.685 | 20:80 | 9.4 | 1.672 | 0.013 | Invention Example |
| 43 | AL | 80 | 200 | 56 | 0.5 | 0.25 | 800 | 31.7 | 33.6 | 22.0 | 1.06 | 0.70 | 560 | 1.667 | 20 : 80 | 10.7 | 1.648 | 0.020 | Invention Example |
| 44 | AM | 80 | 200 | 57 | 0.5 | 0.25 | 800 | 31.7 | 33.8 | 21.6 | 1.06 | 0.68 | 560 | 1.667 | 20 : 80 | 10.4 | 1.647 | 0.021 | Invention Example |
| 45 | AN | 80 | 200 | 56 | 0.5 | 0.25 | 800 | 31.7 | 34.0 | 22.1 | 1.07 | 0.70 | 560 | 1.667 | 20 : 80 | 10.4 | 1.645 | 0.021 | Invention Example |
| 46 | AO | 80 | 200 | 57 | 0.5 | 0.25 | 800 | 31.7 | 33.9 | 21.8 | 1.07 | 0.69 | 560 | 1.666 | 20 : 80 | 10.6 | 1.646 | 0.019 | Invention Example |

EP 4 400 610 A1

| Test No. | Steel symbol | Heat treatment before final cold rolling | | 1st pass of final cold rolling | | Final thickness of cold rolling (mm) | Cold-band annealing temp. (°C) | Steel sheet properties after cold-band annealing | | | | | | | $H_2$:$N_2$ (vol% ratio) of atmosphere in core annealing | Steel sheet properties after core annealing | | | Remarks |
|---|---|---|---|---|---|---|---|---|---|---|---|---|---|---|---|---|---|---|---|
| | | Cooling temp. (°C) | Heating temp. (°C) | Bite temp. (°C) | Surface roughness Ra ($\mu$m) of WR | | | Average crystal grain size ($\mu$m) | | | Crystal grain size ratio | | Fatigue strength (MPa) | Magnetic flux density $B_{50}$(T) | | Iron loss $W_{10/400}$ (W/kg) | Magnetic flux density $B_{50}$(T) | Deterioration margin $\Delta B_{50}$(T) of magnetic flux density | |
| | | | | | | | | All orientations D1 | {411}<148> orientation D2 | {211}<011> orientation D3 | D2/D1 | D3/D1 | | | | | | | |
| 47 | AP | 80 | 200 | 58 | 0.5 | 0.25 | 800 | 31.8 | 34.6 | 22.2 | 1.09 | 0.70 | 560 | 1.668 | 20 : 80 | 10.6 | 1.645 | 0.023 | Invention Example |
| 48 | AQ | 80 | 200 | 56 | 0.5 | 0.25 | 800 | 31.6 | 34.3 | 22.1 | 1.09 | 0.70 | 560 | 1.667 | 20 : 80 | 10.6 | 1.646 | 0.020 | Invention Example |
| 49 | AR | 80 | 200 | 56 | 0.5 | 0.25 | 800 | 31.5 | 33.7 | 22.0 | 1.07 | 0.70 | 560 | 1.668 | 20 : 80 | 10.7 | 1.647 | 0.021 | Invention Example |
| 50 | AS | 80 | 200 | 55 | 0.5 | 0.25 | 800 | 31.5 | 34.0 | 21.9 | 1.08 | 0.70 | 540 | 1.682 | 20 : 80 | 9.8 | 1.663 | 0.019 | Invention Example |
| 51 | AT | 80 | 200 | 57 | 0.5 | 0.25 | 800 | 31.8 | 33.8 | 21.9 | 1.06 | 0.69 | 540 | 1.681 | 20 : 80 | 9.6 | 1.661 | 0.020 | Invention Example |
| 52 | AU | 80 | 200 | 57 | 0.5 | 0.25 | 800 | 31.8 | 34.5 | 22.1 | 1.09 | 0.70 | 540 | 1.682 | 20 : 80 | 9.8 | 1.662 | 0.020 | Invention Example |

Industrial Applicability

The method of the present invention is applicable not only to the production of a non-oriented electrical steel sheet but also to the production of a primary recrystallization annealed sheet for a grain-oriented electrical steel sheet having excellent magnetic flux density. In addition, the steel sheet of the present invention can be used not only for motors of HEVs/EVs but also for other high-speed motors, such as high-efficiency air conditioner motors, main shaft motors of machine tools, and railway motors.

**Claims**

1. A non-oriented electrical steel sheet having an ingredient composition comprising C: 0.0005 to 0.0050 mass%, Si: 1.0 to 5.0 mass%, Mn: 0.05 to 5.0 mass%, P : 0 to 0.1 mass%, S: 0 to 0.010 mass%, Al: 0.005 to 3.0 mass%, and N: 0 to 0.010 mass% with a balance being Fe and unavoidable impurities,

   **characterized in that**

   D1 is 75 $\mu$m or less and that
   D1 to D3 satisfy the following Expressions (1) and (2):

   $$D2/D1 \geq 1.02 \ ...(1)$$

   $$D3/D1 \geq 0.60 \ ...(2),$$

   wherein
   D1 represents an average crystal grain size of crystal grains with all orientations, D2 represents an average crystal grain size of crystal grains with an orientation {411}<148>, and D3 represents an average crystal grain size of crystal grains with an orientation {211}<011>, each measured by electron backscatter diffraction.

2. The non-oriented electrical steel sheet according to claim 1, wherein
   in addition to the ingredient composition, the steel sheet comprises at least one group selected from the following Groups A to E:

   Group A: Cr: 0.01 to 5.0 mass%;
   Group B: at least one selected from the ingredients consisting of Ca: 0.001 to 0.01 mass%, Mg: 0.0001 to 0.01 mass%, and REM: 0.001 to 0.05 mass%;
   Group C: at least one selected from the ingredients consisting of Sn: 0.001 to 0.2 mass% and Sb: 0.001 to 0.2 mass%;
   Group D: Ni: 0.01 to 3.0 mass%; and
   Group E: at least one selected from the ingredients consisting of Cu: 0.01 to 0.5 mass%, Nb: 0.0010 to 0.05 mass%, Ti: 0.0010 to 0.05 mass%, and V: 0.0010 to 0.20 mass%.

3. The non-oriented electrical steel sheet according to claim 1 or 2, wherein,
   in addition to the ingredient composition, the steel sheet comprises at least one group selected from the following Groups F and G:

   Group F: at least one selected from the ingredients consisting of Ta: 0.0001 to 0.01 mass%, B: 0.0001 to 0.005 mass%, Ga: 0.0001 to 0.01 mass%, Pb: 0.0001 to 0.005 mass%, Zn: 0.001 to 0.01 mass%, Mo: 0.001 to 0.05 mass%, and W: 0.001 to 0.05 mass%; and
   Group G: at least one selected from the ingredients consisting of Ge: 0.001 to 0.05 mass%, As: 0.001 to 0.05 mass%, and Co: 0.001 to 0.05 mass%.

4. A method for producing a non-oriented electrical steel sheet, comprising:

   hot rolling a steel slab having an ingredient composition comprising C: 0.0005 to 0.0050 mass%, Si: 1.0 to 5.0 mass%, Mn: 0.05 to 5.0 mass%, P: 0 to 0.1 mass%, S: 0 to 0.010 mass%, Al: 0.005 to 3.0 mass%, and N: 0 to 0.010 mass%, with a balance being Fe and unavoidable impurities;

performing hot-band annealing;

performing cold rolling once or cold rollings with intermediate annealing interposed between each cold rolling twice or more to obtain a cold-rolled sheet with a final thickness; and

subjecting the cold-rolled sheet to cold-band annealing,

**characterized in that**

the steel sheet before the cold rolling to obtain the final thickness is subjected to heat treatment by cooling the steel sheet to 90°C or below, aging the steel sheet at a temperature of 100 to 300°C, and then cooling the steel sheet again,

that the first pass of the cold rolling to obtain the final thickness is conducted at a bite temperature of 70°C or below, using a work roll having a surface roughness Ra of 0.05 to 3.0 μm, and

that the soaking temperature of the cold-band annealing is set in the range of 700 to 950°C.

5.  The method for producing the non-oriented electrical steel sheet according to claim 4, wherein

the steel slab further comprises, in addition to the ingredient composition, at least one group selected from the following Groups A to E:

Group A: Cr: 0.01 to 5.0 mass%;

Group B: at least one selected from the ingredients consisting of Ca: 0.001 to 0.01 mass%, Mg: 0.0001 to 0.01 mass%, and REM: 0.001 to 0.05 mass%;

Group C: at least one selected from the ingredients consisting of Sn: 0.001 to 0.2 mass% and Sb: 0.001 to 0.2 mass%;

Group D: Ni: 0.01 to 3.0 mass%; and

Group E: at least one selected from the ingredients consisting of Cu: 0.01 to 0.5 mass%, Nb: 0.0010 to 0.05 mass%, Ti: 0.0010 to 0.05 mass%, and V: 0.0010 to 0.20 mass%.

6.  The method for producing the non-oriented electrical steel sheet according to claim 4 or 5, wherein

the steel slab further comprises, in addition to the ingredient composition, at least one group selected from the following groups F and G:

Group F: at least one selected from the ingredients consisting of Ta: 0.0001 to 0.01 mass%, B: 0.0001 to 0.005 mass%, Ga: 0.0001 to 0.01 mass%, Pb: 0.0001 to 0.005 mass%, Zn: 0.001 to 0.01 mass%, Mo: 0.001 to 0.05 mass%, and W: 0.001 to 0.05 mass%; and

Group G: at least one element selected from the ingredients consisting of Ge: 0.001 to 0.05 mass%, As: 0.001 to 0.05 mass%, and Co: 0.001 to 0.05 mass%.

# INTERNATIONAL SEARCH REPORT

International application No.

**PCT/JP2022/034142**

## A. CLASSIFICATION OF SUBJECT MATTER

*C21D 8/12*(2006.01)i; *C22C 38/00*(2006.01)i; *C22C 38/06*(2006.01)i; *C22C 38/60*(2006.01)i; *H01F 1/147*(2006.01)i
FI: C22C38/00 303U; C22C38/06; C22C38/60; C21D8/12 A; H01F1/147 175

According to International Patent Classification (IPC) or to both national classification and IPC

## B. FIELDS SEARCHED

Minimum documentation searched (classification system followed by classification symbols)

C21D8/12; C21D9/46; C22C38/00-38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2016-211016 A (NIPPON STEEL & SUMITOMO METAL CORP.) 15 December 2016 (2016-12-15) | 1-6 |
| A | WO 2017/047049 A1 (JFE STEEL CORP.) 23 March 2017 (2017-03-23) | 1-6 |
| A | JP 2020-100860 A (NIPPON STEEL CORP.) 02 July 2020 (2020-07-02) | 1-6 |
| A | WO 2020/166718 A1 (NIPPON STEEL CORP.) 20 August 2020 (2020-08-20) | 1-6 |
| A | WO 2021/006280 A1 (JFE STEEL CORP.) 14 January 2021 (2021-01-14) | 1-6 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

### INTERNATIONAL SEARCH REPORT
Information on patent family members

International application No.

**PCT/JP2022/034142**

| Patent document cited in search report | | | Publication date (day/month/year) | Patent family member(s) | | | Publication date (day/month/year) |
|---|---|---|---|---|---|---|---|
| JP | 2016-211016 | A | 15 December 2016 | (Family: none) | | | |
| WO | 2017/047049 | A1 | 23 March 2017 | US | 2018/0340239 | A1 | |
| | | | | EP | 3351649 | A1 | |
| | | | | CA | 2992966 | A1 | |
| | | | | CN | 108026621 | A | |
| | | | | KR | 10-2018-0040658 | A | |
| | | | | TW | 201716158 | A | |
| JP | 2020-100860 | A | 02 July 2020 | (Family: none) | | | |
| WO | 2020/166718 | A1 | 20 August 2020 | EP | 3926060 | A1 | |
| | | | | KR | 10-2021-0112365 | A | |
| | | | | CN | 113474472 | A | |
| | | | | TW | 202035710 | A | |
| WO | 2021/006280 | A1 | 14 January 2021 | EP | 3998358 | A1 | |
| | | | | KR | 10-2022-0002546 | A | |
| | | | | CN | 114040989 | A | |
| | | | | TW | 202104614 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008050686 A
- JP 2004315956 A

- WO 2018147044 A